# EUROPEAN PATENT APPLICATION

(11) **EP 4 465 275 A1**
(43) Date of publication of application: **20.11.2024**
(21) Application number: 24173495.3
(22) Date of filing: 30.04.2024
(51) Int. Cl.: G08G 1/0967, G01C 21/00, G08G 1/16, H04W 4/44, H04W 4/46

(54) **METHOD, DEVICE, AND COMPUTER PROGRAM FOR IMPROVING LOCALIZATION OF AN OBJECT OR EVENT IN INTELLIGENT TRANSPORT SYSTEMS**

(30) Priority: 09.05.2023 GB 202306838
(71) Applicant: CANON KABUSHIKI KAISHA, Tokyo 146-8501 (JP)
(72) Inventor: NASSOR, Eric, 35235 THORIGNE-FOUILLARD (FR); LE HOUEROU, Brice, 35690 ACIGNE (FR); MORVAN, Isabelle, 35135 CHANTEPIE (FR); RUELLAN, Hervé, 35700 RENNES (FR)
(74) Representative: Casalonga

(57) **Abstract**

According to some embodiments of the disclosure, it is provided a method of communication in an intelligent transport system, ITS. After obtaining a geometrical description of a plurality of sections of a portion of a road infrastructure, each section of the plurality of sections comprising at least one lane and at least one section of the plurality of sections comprising a plurality of lanes, a connection between at least one lane of the at least one section of the plurality of sections comprising a plurality of lanes and at least one lane of another section of the plurality sections is determined and an ITS message comprising an item of information describing the determined connection is transmitted.

## Description

### FIELD OF THE DISCLOSURE

The present disclosure relates generally to Intelligent Transport Systems (ITSs) and more specifically to Cooperative Intelligent Transport Systems (C-ITSs).

### BACKGROUND OF THE DISCLOSURE

Cooperative Intelligent Transport Systems (C-ITSs) is an emerging technology for future transportation management that aims at improving road safety, traffic efficiency and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water, and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Cooperative Awareness Messages (CAMs), Vulnerable Road Users Awareness Messages (VAMs), and Decentralized Environmental Notification Messages (DENMs). An ITS-S sending an ITS message is referred to as an "originating" ITS-S and an ITS-S receiving an ITS message is referred to as a "receiving" ITS-S. The VAMs are generally periodically sent with a period varying depending, for example, on the speed of the originating ITS-S.

It is recalled here that EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed). The CAMs are generally periodically sent with a period varying from 100 milliseconds to one second depending, for example, on the speed of the originating ITS-S.

It is also to be noted that ETSI TS 103 300-3 (December 2022) standard defines the Vulnerable Road User (VRU) Awareness basic Service (VBS), that may be used by an originating ITS-S to send, using broadcast VAMs, notifications to other ITS-Ss, such as dynamic properties of the VRU (motion, acceleration, etc.).

It is also to be noted that ETSI TS 103 831 (v2.1.1 of November 2022) standard defines the Decentralized Environmental Notification Basic Service, that may be used by an originating ITS-S to send, using broadcast DENMs, notifications to other ITS-Ss, such as warnings or alerts. Such a message notifies an event (e.g., a road hazard, driving environment information, traffic condition information, etc.) detected by the originating ITS-S.

Each ITS station has an environment model called a Local Dynamic Map (LDM) that is regularly updated with highly dynamic data to locate vehicles, pedestrians, bicycles, etc., in the vicinity of the ITS station. The LDM is updated using information from on-board sensors and completed with information from received ITS messages such as awareness messages containing the ego-position and the speed of connected vehicles (CAM) and/or of connected Vulnerable Road Users (VAM).

In ITS messages, various positions of road objects or events are exchanged, such as the following:
- positions of vehicles, pedestrians, bicycle, or obstacles on the road,
- positions of events: accident, stopped vehicle, or traffic jam,
- areas: road surface status, road work, or crosswalks, and
- trajectories for vehicles, pedestrians, or bicycle.

Absolute world geographical positions may be used (for example latitude, longitude, altitude, coded for example in the WGS84 format). However, in a vehicle the precision obtained by the GNSS (global navigation satellite systems) may be limited because of the cost of precise GNSSs and also of the particular conditions on the location of the vehicle. For example, some satellites may be hidden by buildings, road tunnels, or trees, or the radio signals may have reflections on adjacent buildings.

On the other hand, a vehicle may be able to compute precisely its position relatively to road marking. For example, a vehicle may use its own sensors (e.g., cameras and lidars) to detect and measure lane separations and road signs.

However, since the road structure may evolve in time because of road works or temporary road marking (such evolutions not being stored in the high resolutions maps stored in any vehicles), it may be useful to share a representation of the road structure, for example in terms of lanes, in the ITS messages exchanged between vehicles and infrastructure so that all the participants share the same understanding of the road structure, making it possible to provide positions relatively to road markings and lane structures.

According to recent contributions (e.g., ETSI ITS ITSWG1(23)063011, ITSWG1(23)000082, and ITSWG1(23)063012), a road configuration container may be added in DENMs to describe a lane structure of a road. However, this solution can be used to compute relative positions of events or objects only for a limited number of situations.

Therefore, there is a need to improve localization of an object or event in Intelligent Transport System.

### SUMMARY OF THE DISCLOSURE

The present disclosure has been devised to address one or more of the foregoing concerns.

In this context, there is provided a solution for improving localization of an object or event in Intelligent Transport System.

According to a first aspect of the disclosure there is provided a method of communication in an Intelligent Transport System, ITS, the method comprising, at a transmitting ITS station:
obtaining a geometrical description of a plurality of sections of a portion of a road infrastructure, each section of the plurality of sections comprising at least one lane and at least one section of the plurality of sections comprising a plurality of lanes;
determining a connection between at least one lane of the at least one section of the plurality of sections comprising a plurality of lanes and at least one lane of another section of the plurality sections; and
transmitting an ITS message comprising an item of information describing the determined connection.

Accordingly, the method of the disclosure makes it possible to describe multi section lanes in a compact description of a road structure, event position, areas, and/or trajectories, using local sensors of vehicles, and thus, to share an up-to-date description with other participants.

According to some embodiments, the ITS message further comprises an item of information describing a least a part of the obtained geometrical description.

Still according to some embodiments, the method further comprises detecting a particular event, the ITS message being transmitted in response to detecting the particular event.

Still according to some embodiments, the method further comprises determining a position of an object or an event, the transmitted ITS message comprising an item of information describing the determined position.

Still according to some embodiments, the position is described as a distance, from a point of reference, along a set of one or more connected lanes.

Still according to some embodiments, the method further comprises determining an area of the road infrastructure, the transmitted ITS message comprising an item of information describing the determined area.

Still according to some embodiments, the determined area is described as a set of one or more portions of one or more lanes of one or more sections.

Still according to some embodiments, the determined area is further described by its beginning and/or its end.

Still according to some embodiments, the determined area is described using a distance, from a point of reference, along a set of one or more connected lanes.

Still according to some embodiments, the method further comprises, prior to or after transmitting the ITS message, transmitting another ITS message, the other ITS message comprising a reference of at least one of the connected lanes.

Still according to some embodiments, the ITS message is a Decentralized Environmental Notification Message, DENM, or a Collective Perception Message, CPM.

Still according to some embodiments, the ITS message is a DENM and the item of information describing the determined connection is stored in a Road Configuration Container, RCC.

According to a second aspect of the disclosure there is provided a method of communication in an Intelligent Transport System, ITS, the method comprising, at a receiving ITS station:
obtaining a geometrical description of a plurality of sections of a portion of a road infrastructure, each section of the plurality of sections comprising at least one lane and at least one section of the plurality of sections comprising a plurality of lanes;
receiving an ITS message comprising an item of information describing a connection between at least one lane of the at least one section of the plurality of sections and at least one lane of another section of the plurality sections; and
upon identifying an event, determining the relevance of the identified event as a function of the connection.

Accordingly, the method of the disclosure makes it possible to describe multi section lanes in a compact description of a road structure, event position, areas, and/or trajectories, using local sensors of vehicles, and thus, to share an up-to-date description with other participants.

According to some embodiments, the method further comprises determining a position of the identified event, the position being described in an item of information of the received ITS message.

Still according to some embodiments, the position is described as a distance, from a point of reference, along a set of one or more connected lanes.

Still according to some embodiments, the method further comprises determining an area of the road infrastructure, the received ITS message comprising an item of information describing the area, the area being associated with the identified event.

Still according to some embodiments, the area is described as a set of one or more portions of one or more lanes of one or more sections.

Still according to some embodiments, the determined area is further described by its beginning and/or its end.

Still according to some embodiments, the area is described using a distance, from a point of reference, along a set of one or more connected lanes.

Still according to some embodiments, the method further comprises, prior to or after receiving the ITS message, receiving another ITS message, the other ITS message comprising a reference of at least one of the connected lanes.

Still according to some embodiments, the ITS message is a Decentralized Environmental Notification Message, DENM, or a Collective Perception Message, CPM.

According to another aspect of the disclosure there is provided a device comprising a processing unit configured for carrying out each of the steps of the method described above.

This aspect of the disclosure has advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an Intelligent Transportation System (ITS) in which some embodiments of the disclosure may be implemented;
**Figure 2** illustrates an example of an ITS station in which some embodiments of the disclosure may be implemented;
**Figure 3** illustrates an example of a structure of a Decentralized Environment Notification Message (DENM), according to some embodiments of the disclosure;
**Figure 4** illustrates two examples of road configurations which can be described with the optional DENNM Road Configuration Container (RCC);
**Figures 5** and **6** illustrate other examples of road configurations which are difficult to describe with the existing optional DENM Road Configuration Container (RCC);
**Figure 7** illustrates an example of a road configuration where multi section lanes may be defined and where two objects and/or events are located on the same multi section lane;
**Figure 8** illustrates example of section lanes;
**Figure 9** schematically illustrates, using a flowchart, an example of steps of a communication method for transmitting DENMs comprising an improved RCC according to some embodiments of the disclosure;
**Figure 10** schematically illustrates, using a flowchart, an example of steps of a communication method for receiving a DENM comprising an improved RCC according to some embodiments of the disclosure;
**Figure 11** illustrates an example of a structure of a collective perception message, CPM, according to some embodiments of the disclosure; and
**Figure 12** is a schematic representation of an example of a communication ITS-S device configured to implement some embodiments of the present disclosure.

### DETAILED DESCRIPTION OF THE DISCLOSURE

The names of the lists and elements (such as data elements) provided in the following description are only illustrative. Embodiments are not limited thereto and other names could be used.

The embodiments of the present disclosure are intended to be implemented in Intelligent Transportation Systems (ITS).

According to some embodiments of the disclosure, an explicit indication of lane connectivity between sections is added within Road Configuration Containers (RCC). These connections may be used to define multi section lanes, areas, trajectories, and maneuvers and to compute distances on multi section lanes, using different structures of the same ITS message or of different ITS messages. Therefore, ITS messages may contain:
- a geometrical description of sections and lanes inside sections,
- connectivity between section lanes, and
- positions of objects or events or distances between objects or events relative to lanes in multiple sections.

This makes it possible for a receiving ITS station to compute the structure of multi section lanes, positions and distances of events on these multi section lanes. Therefore, based on ITS messages and RCCs, a receiving ITS may determine whether a vehicle planned trajectory may reach an event or an object and thus, may take countermeasures. The driver may then be alerted to change the vehicle behavior.

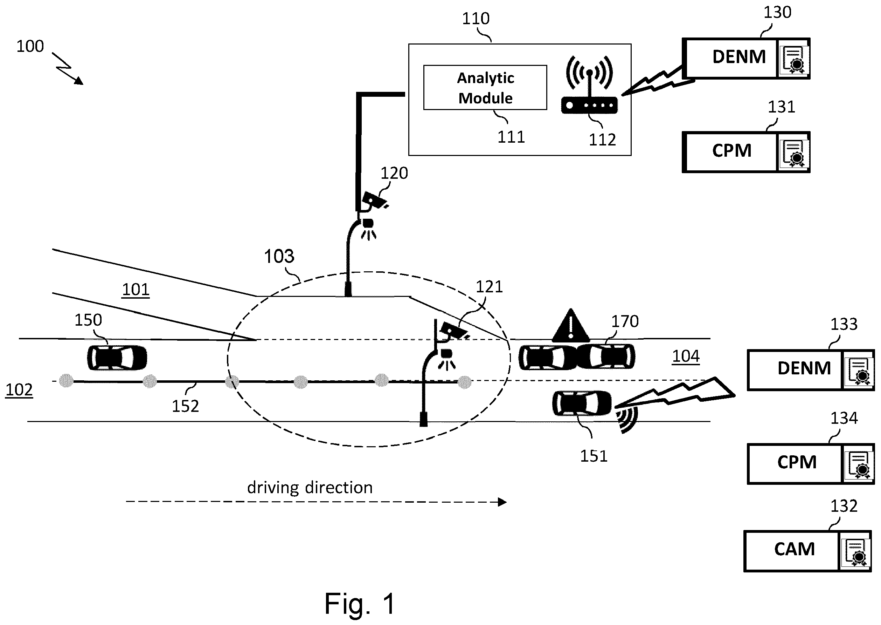

**Figure 1** illustrates an example of an Intelligent Transportation System (ITS) 100 in which some embodiments of the disclosure may be implemented.

As illustrated, the ITS 100 is implemented at a road junction of a first road referenced 101, that comprises one lane, and of a second road referenced 102, that comprises two lanes. According to this example, the two roads are merging in an intermediate section 103, having 3 lanes, that finally results in a new road 104 having 2 lanes.

Still according to this example, the ITS system comprises a fixed road side entity 110 and several entities, each of these entities carrying or comprising an ITS station (ITS-S), for transmitting and/or receiving ITS messages. In particular, these entities comprise vehicles 150 and 151.

The fixed road side entity 110 comprises a set of sensors, such as image sensors, for example video cameras 120 and 121 and/or Lidar and/or radar (not represented), and an analytical module to analyze data provided by the sensors, such as a Situation Analysis module 111. The video cameras 120 and 121 are configured to scan a monitored area, i.e. a part of the road, and thus reproduce images of the monitored area.

The sensors and the analytical module, i.e. the video cameras 120 and 121 and Situation Analysis module 111, are connected so that the Situation Analysis module 111 processes the streams of data captured by the sensors, in particular by video cameras 120 and 121. According to some embodiments, the analytical module and the sensors may be separate from or embedded within the road side entity 110. For example, the analytical module may be wire-connected to video camera 120 that may be remote (i.e. not embedded in the road side entity 110).

The processing by the analytical module, e.g. Situation Analysis module 111, aims at detecting objects or events potentially present in the monitored area, referred to as "perceived objects" or "detected objects" hereinafter.

The analytical module, e.g. Situation Analysis module 111, is also configured to output a list of the detected objects and events respectively associated with corresponding description information referred to as state vector. The state vector may include for instance parameters as position, kinematic, temporal, behavioral or object type classification information, etc.

Therefore, the analytical module may identify, among the detected objects, the Vulnerable Road Users, VRU, such as pedestrians, cyclists as well as motorcyclists and also persons with disabilities or reduced mobility and orientation. Such VRUs may carry an ITS equipment, that may be for instance included in a smartphone, a GPS, a smart watch or in a cyclist equipment, etc. The analytical module can also identify events such as accident, traffic jam, dangerous weather, or road surface.

For example, in the illustrated example, by scanning the area, the Situation Analysis module 111 has captured the following detected objects: objects 150, 151, and 170 respectively corresponding to the vehicles on the roadway, object 170 corresponding to an accident event on the road.

Further, the detected objects may be classified, for example, according to whether the ITS station is a vehicle, a VRU, or a RSU, or of another type. Such object type classification may be based for example on predetermined rules, provided during the setting up of the road side entity 110, or more generally the ITS-S.

In addition the analytic module comprises some situation analysis functions to analyze the trajectories of the detected objects, to predict their future trajectories, and to identify possible risks of collision.

As illustrated, road side entity 110 further comprises a Road Side Unit (RSU) referenced 112, including a Roadside ITS-S as specified in the reference architecture of an ITS station defined in the version V1.1.1 of the ETSI EN 302 665 specification. Using RSU 112, road side entity 110 may share information relative to the detected objects and events with the other ITS-Ss of the ITS .

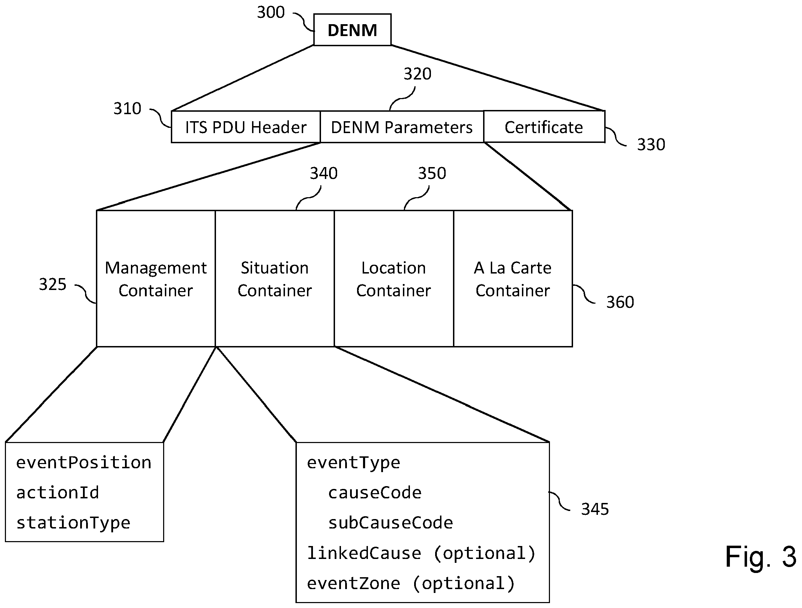

Such sharing of safety warning information is performed using ITS messages, particularly the so-called Decentralized Environmental Notification Message, e.g., DENM 130, defined in document ETSI ETSI TS 103 831. An example of a format of a DENM is described with reference to Figure 3.

Road side entity 110 may also share information relating to objects detected by its local sensors using ITS messages, particularly the so-called Collective Perception Message, e.g., CPM 131, defined in document ETSI TR 103 562 and ETSI TS 103 324. CPMs are used by road side entity 110 to share its perceived environment, i.e. detected objects, with receiving ITS stations ("originating ITS-S" and "receiving ITS-S" are used to respectively designate the ITS-S sending an ITS message and the ITS-S receiving an ITS message). According to some embodiments, CPMs are sent periodically by the originating ITS-S.

Similar DENMs and CPMs may also be sent by vehicle 151 (e.g., DENM 133 and CPM 134). In addition, a vehicle may also send CAMs (e.g., CAM 132 sent by vehicle 151) to indicate its own position and speed. CAM messages are sent by vehicles of the car, bus, or truck type. Vehicle 151 could also be of the bicycle, e-scooter, or motorcycle type and thus, send messages of the VAM type, similar to the CAM. To that end, vehicle 151 may haves a similar architecture as the road side station 110 with sensors (e.g., cameras, Lidar, radar, etc.), but also GNSS and/or IMU (Inertial Measure Unit) to obtain an approximate position of the ITS-S. The vehicle may also contain an analytical module to analyze the sensor data and a mobile ITS-S such as an On Board Unit to share information relative to the detected objects and events with other ITS-Ss of the ITS.

DENM message 130 or 133 may contain an indication of the type of event (e.g. an accident), its position in latitude and longitude, and a trace 152 which indicates a trajectory which leads to the event.

Accordingly, vehicle 150 containing an ITS-S may thus receive DENMs, analyze the content of these messages, compare its trajectory with the trace and determine whether its trajectory may lead to the place of the event. A warning message may be displayed to the driver. In the case of an autonomous vehicle, the vehicle can decide to slow down, stop, or change its direction. An autonomous vehicle is a vehicle with a high level of automation as defined by SAE J3016 such as a level 3, 4 or 5 in which the driver is not involved in the driving decisions during some periods of time.

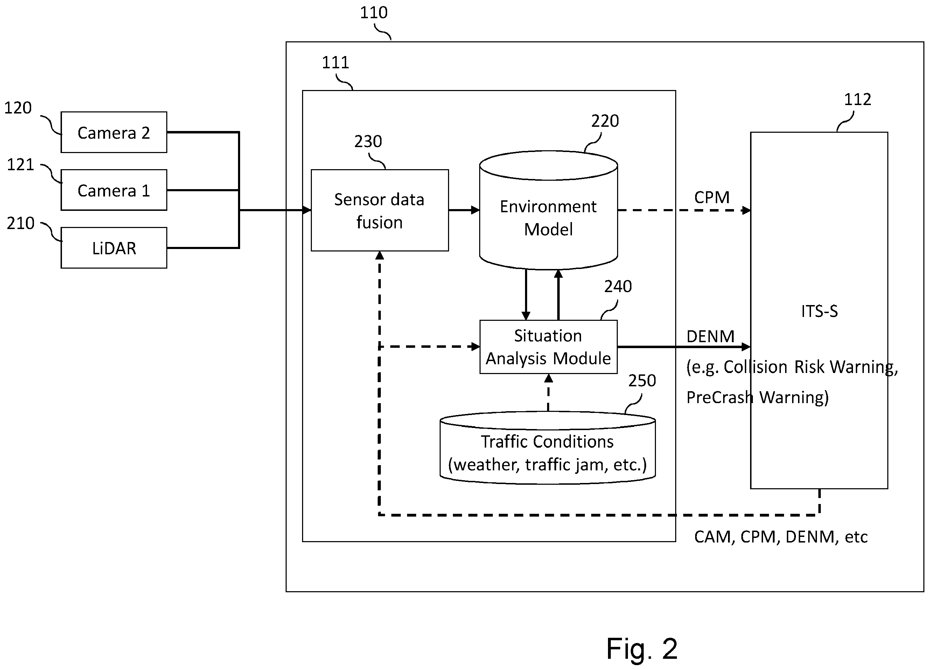

**Figure 2** illustrates an example of an ITS station in which some embodiments of the disclosure may be implemented.

As illustrated, analytic module 111 is connected to one or more sensors such as cameras 120 and 121, LiDAR 210, and radar (not represented). These sensors may be fixed and located at a road junction, for example in a road side ITS-S. Alternatively, these sensors may be embedded within a vehicle. In such a case, the sensors may also comprise a GNSS and/or an IMU (Inertial Measure Unit) to obtain an approximate position of the ITS-S.

The data obtained from each sensor are analyzed to detect objects that are in turn analyzed by the sensor data fusion module 230. This module can fuse objects detected by several sensors if there is enough confidence that they are the same objects (by analysis their object type, position, speed, trajectory, etc). Newly detected objects or update about tracked objects are then used to update environment model 220.

The environment model contains a list of objects, containing information for each tracked object such as:
- a unique identifier to track the object,
- a time of measurement of data relating to the object,
- a list of the sensors that have perceived the object,
- an object relative distance and speed from the ITS-S reference position, with a corresponding confidence level,
- a type of object (e.g., vehicle, pedestrian, etc.), with a corresponding confidence level, and
- an associated ITS station identifier, with a corresponding confidence level.

In the case of a moving ITS-S (e.g., in the case of an ITS-S associated with a vehicle or a pedestrian), the sensors are also used to determine the position of the ITS-S. GNSS and IMU may be used to obtain an approximate position, for example with a few meters accuracy in the case of a classical GNSS. High precision GNSS may also be used, but because of their relatively high cost, few stations may have a precise absolute position (e.g., an accuracy of a few tens of centimeters). Other sensors like cameras may also be used to obtain relative position of the ITS-S with reference to road signalization such as road marking or road signs. Such items of information may then be used to compute precisely the relative position of a vehicle within a road lane and to determine the road lane on which the vehicle is located.

Optionally, the sensor data fusion module may receive ITS message information extracted from CAMs or other ITS messages received by ITS-S 112. As for the local sensor data fusion, if there is enough confidence that an object perceived by local sensors is corresponding to the ITS-S that has transmitted a CAM, then the corresponding ITS station identifier contained in the CAM is associated with the tracked object in the environment model (e.g., CAM 132 is corresponding to tracked object 151 in Figure 1). The sensor data fusion module 230 is computing a confidence level to the ITS identifier association. For example, it is computed based on the accuracy of the position contained in the CAM and the one measured by the local sensors. According to another example, it is computed based on the number of perceived objects versus the number of transmitting ITS-S for a zone.

Situation analysis module 240 is continuously analyzing the trajectories of the objects contained in the environment model 220 and predicting their future trajectories to detect collision risk. Optionally, the situation analysis module 240 may use other information such as the traffic conditions (traffic jam, traffic light status, speed limits, etc.), work road conditions, and weather conditions, as input for its prediction algorithm.

As a result, situation analysis module 240 may update the environmental model with one or several of the following items of information:
- an object predicted trajectory,
- an object safety situation (e.g., a collision risk or a pre-crash), and
- events.

ITS-S 112 may transmit a DENM, i.e., a warning message, triggered by the situation analysis module. In addition, according to particular embodiments of the disclosure, the ITS-S may periodically transmit CPMs containing a list of perceived objects based on environment model 220.

**Figure 3** illustrates an example of a structure of a Decentralized Environment Notification Message (DENM), according to some embodiments of the disclosure, which is based on the DENM format as specified in the version 2.1.1 of the ETSI TS 103 831 specification.

DENM 300 aims at reporting a warning situation detected by a situation analysis module, for example situation analysis module 240 in Figure 2.

To that end, DENM 300 contains an ITS PDU header 310, a "DENM Parameters" field 320, and a Certificate 330.

ITS PDU header 310 includes information relating to the used protocol and information relating to the type of the message, which is a DENM message type in this case.

"DENM Parameters" field 320 may contain a Management Container 325, a Situation Container 340, a Location Container 350, and a A La Carte Container 360.

Each container comprises some data elements (DE) or data frames (DF). ETSI TS CDD Specification (Common Data Dictionary for ITS messages, as defined in ETSI TS 102 894) is defining the common data elements and data frames used in ITS messages.

Management Container 325 contains information regarding an event detected by the situation analysis module. In view of the disclosure, the most relevant fields are the following:
- *eventPosition:* this data frame should indicate the geographical position of the detected event in absolute geographical position, for example latitude, longitude,
- *actionId:* this data frame should contain the station identifier (station ID) of the originating ITS-S and a sequence number used to identify the action taken after an event is detected by the originating ITS-S, and
- *stationType:* this data element should contain the type of the originating ITS-S (e.g., roadside unit or vehicle). The type of the station should be set according to TS 102 894-2.

Situation Container 340 contains information regarding the warning event type, denoted *eventType* and referenced 345. The type of warning event type may be indicated by a combination of a *causeCode* and a *subCauseCode.*

Some examples of *eventType* are the following:
- adverse weather conditions such as fog, precipitation, and traction loss,
- dangerous situation
   ∘ electronic emergency brake light,
   ∘ automatic brake intervention, and
   ∘ reversible occupant restraint system intervention
- special vehicles:
   ∘ emergency vehicles in operation,
   ∘ stationary safeguarding emergency vehicles, and
   ∘ stationary recovery service warning,
- stationary vehicles:
   ∘ stopped vehicles,
   ∘ broken-down vehicle, and
   ∘ post-crash,
- traffic jam:
   ∘ dangerous end of queue
- traffic jam ahead,
- roadwork, and
- obstacles on the road.

The *IinkedCause* may indicate a second *eventType* also related to the warning.

The optional *eventZone* DF may contain a list of *eventPoints.* Depending on the warning type, the *eventZone* may have different meanings as follows:
- a list of points where the same event has been detected (for example a road surface issue creating a traction loss), or
- the points where a dynamic event has been detected (for example the end of queue of a traffic jam, or the position of an animal on the road, or
- a linear relevance zone for an extended event (for example road work or a traffic jam).

Location Container 350 may contain additional information about the event location. It should be set according to ETSI TS 103 831.

The traces data frame required in the Location Container should contain a list of ordered waypoints that forms an itinerary approaching toward the event position. The trace field provides information representative of the vehicle trajectory (e.g., trajectory 152 in Figure 1) up to the event point (e.g., accident event 170 in Figure 1) which has triggered the DENM warning event.

It is observed that multiple paths may be included in DENM, e.g., in the case where there are more than one possible path to reach a detected event, e.g., in an intersection area.

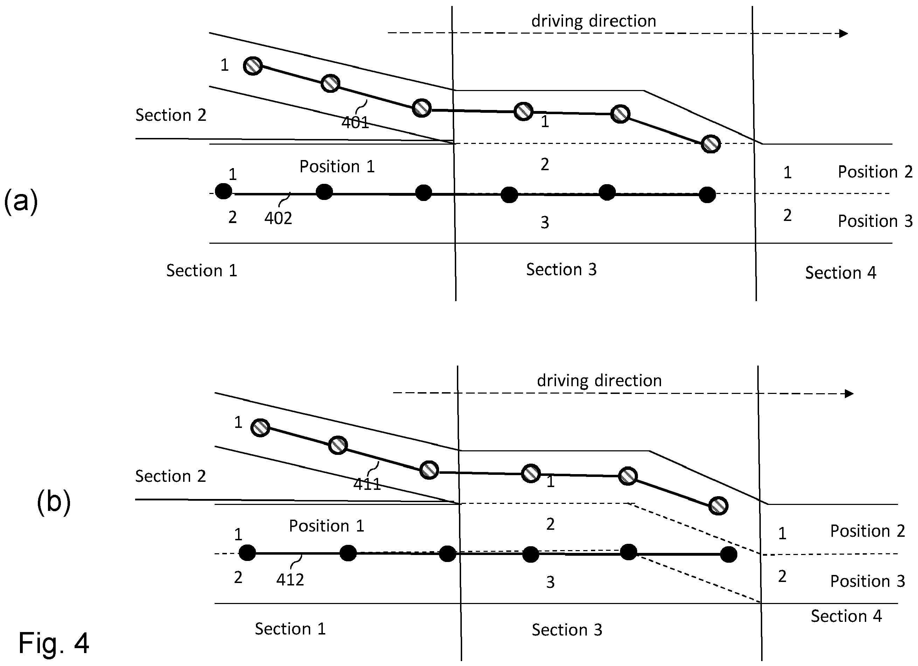

Several optional containers may be added in a DENM. In view of the disclosure, a relevant a la carte container is the lanePosition Container which contains the reference of the lane where the event has been detected. A new a la carte container, denoted the Road Configuration Container, has been proposed recently to describe the structure of the road. It is described by reference to Figure 4.

**Figure 4** illustrates two examples of road configurations which can be described with the optional DENNM Road Configuration Container (RCC), described in ETSI ITSWG1(23)063011. The RCC provides a simple description of the configuration of a road where a hazardous event is detected. This can help an application in a receiving ITS-S to contextualize the position (*eventPosition*), the zone (e.g. *eventZone*), and optionally the lane(s) where the event is detected and announced in the DENM.

According to this description, a road is decomposed in sections. Each section has a fixed number of lanes which are described for each section. The relation between the traces and the sections may also be indicated for each section. The lane numbering scheme is standardized in ETSI CDD that counts all lanes per carriageway, per traffic direction, from the inner hard shoulder (if existing) to the outer hard shoulder, i.e., from the leftmost lane to the rightmost lane for right-hand traffic (the numbering is inverted for left-hand traffic).

The syntax of the road configuration container is the following:

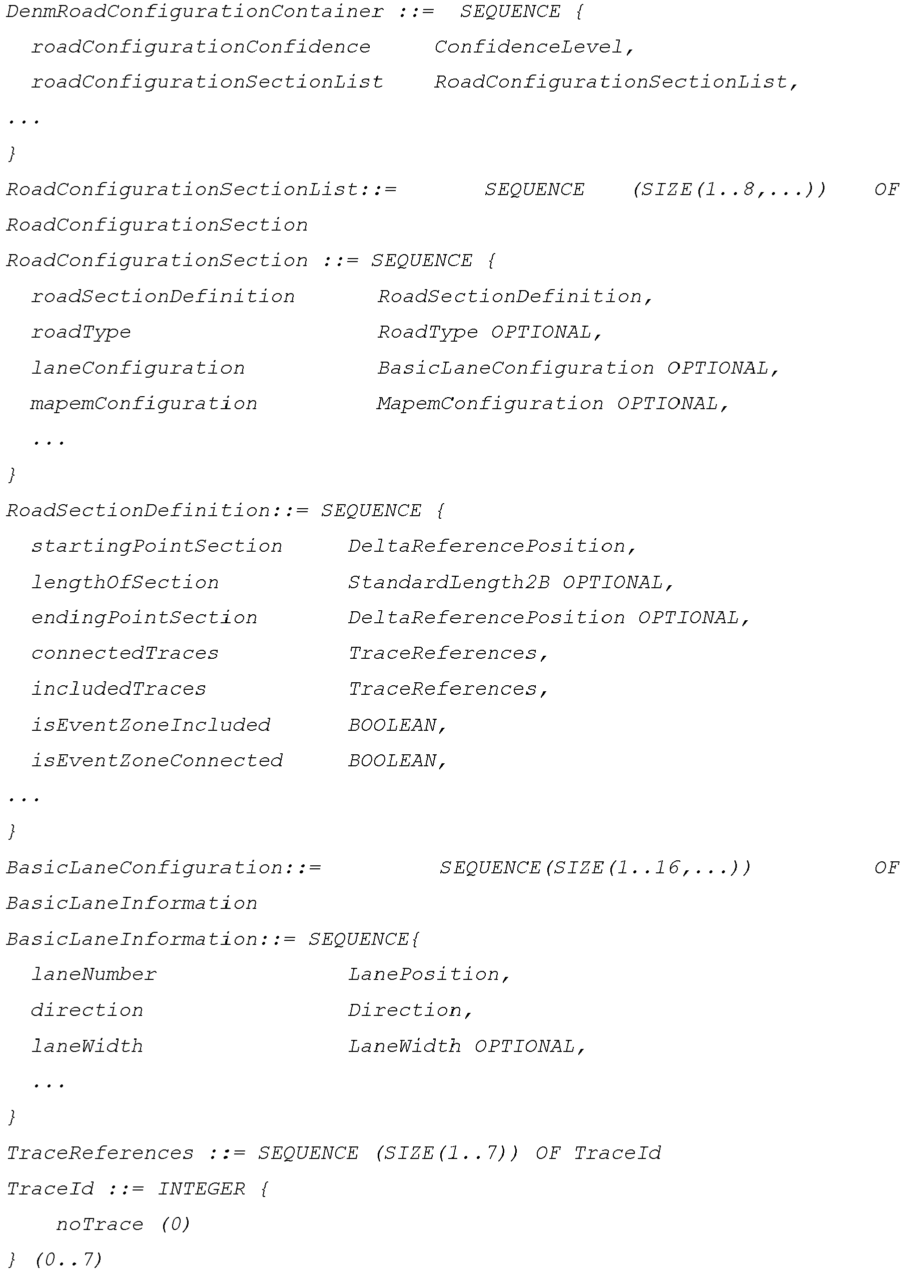

It is assumed, in Figure 4, that the traffic is a right-hand traffic. As illustrated, the road structure is composed of four sections, the first section (section 1) comprising two lanes, the second section (section 2) comprising a single lane, the third section (section 3) comprising three lanes, and the fourth section (section 4) comprising two lanes. Each section has also a geographical structure with a start point, an end point and a length.

For each section, there is also an indication of which trace is included and connected to the beginning of the section and an indication to indicate whether the *eventZone* is included in the section, and whether the *eventZone* is connected to the starting point of the section.

The same road configuration is used to describe the examples illustrated in Figures 4a and 4b, where two traces are present with numbers traceNumber1 (401, 411) and traceNumber2 (402, 412), the event is located in position 2, and there is no *eventZone:* 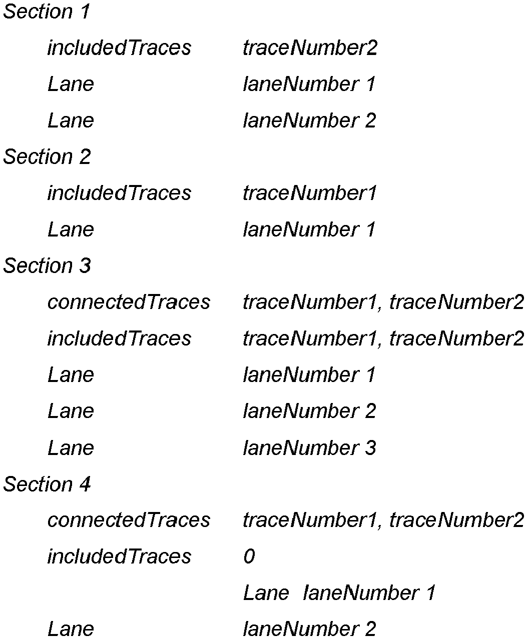 where *connectedTraces* provides information about the identifiers of the traces having one or an ordered subset of waypoints located upstream of the section starting point, *includedTraces* provides references of the traces that are present in the section, *isEventZonelncluded* indicates whether or not a detected event zone is present in the section, and *Lane* provides references of the lanes present in the section.

It is observed that the reference of a lane may change from one section to the following. For example, in Figure 4a, lane 1 of section 1 becomes lane 2 of section 3 and then lane 1 of section 4 while in Figure 4b, lane 1 of section 1 becomes lane 2 of section 3 and then lane 2 of section 4, because of a different lane connectivity.

Accordingly, as apparent from the previous road description and from Figure 4, RCC does not make it possible to distinguish between different configurations such as the one illustrates in Figures 4a and 4b. Therefore, in certain circumstances, it is impossible for an incoming vehicle (for example a vehicle located in position 1) to determine if an event (for example an event located in position 2) is located on a lane connected to its current lane. As a consequence, a vehicle located in position 1 cannot determine if the accident located in position 2 is on its trajectory and thus, if it has to maneuver to change of lane, which may result in an incorrect warning or a wrong decision (e.g., stopping the vehicle instead of continuing on its lane).

It is observed that if traces may be used in certain circumstances to indicate connectivity between lanes of contiguous sections, such a solution presents drawbacks since the traces are optional and may not always be provided, the number of traces is limited, etc.

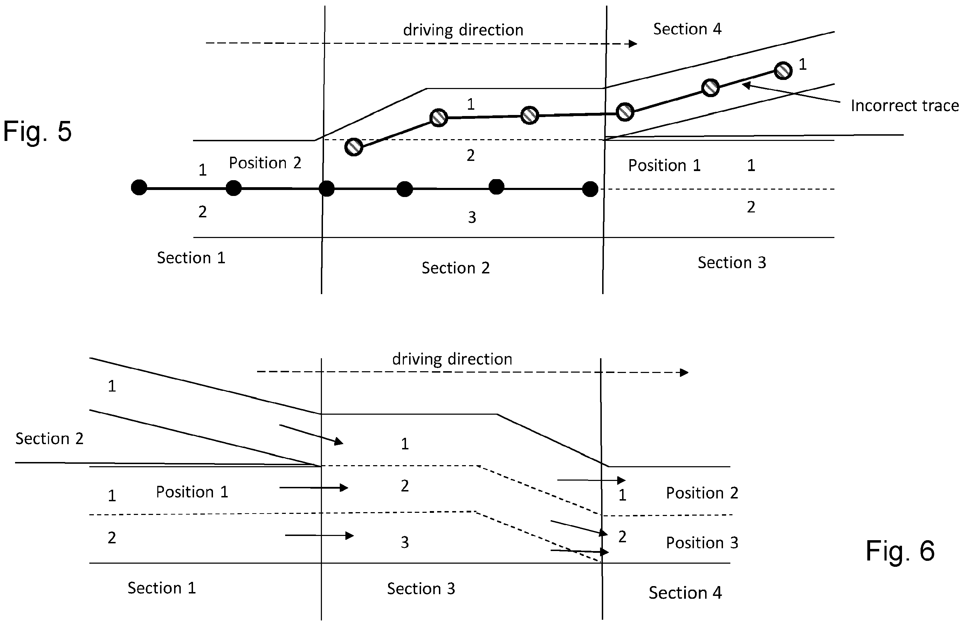

**Figures 5** and **6** illustrate other examples of road configurations which are difficult to describe with the existing optional DENM Road Configuration Container (RCC).

As illustrated in Figure 5, the road configuration comprises four sections, the first section (section 1) comprising two lanes, the second section (section 2) comprising three lanes, the third section (section 3) comprising two lanes, and the fourth section (section 4) comprising a single lane. Since a trace should lead to an event, the trace represented with hatched waypoints (connecting lane 1 of section 2 to lane 1 of section 4) cannot be described in a DENM. In such a case, a DENM RCC does not make it possible to describe which section is connected to section 4 and which lane is connected to lane 1 of section 4, while such information is useful for the incoming vehicle located in position 2 to decide whether it has to maneuver to change of lane, to use lane 1 of section 4 instead of continuing to the event located in position 1.

It is observed that even if the section connectivity is completely determined, this does not solve the issue of determining the section lane connectivity. Indeed, for distinguishing the cases illustrated in Figures 4a and 4b, it is necessary to have an indication of which lane from section 3 is connected to which lane of section 4.

In order to overcome these issues, an explicit indication of the following section lane number is added to the lane information in the road configuration container, which can be expressed (using the ASN.1 syntax) as follows (the difference with the current syntax being identified with bold characters):

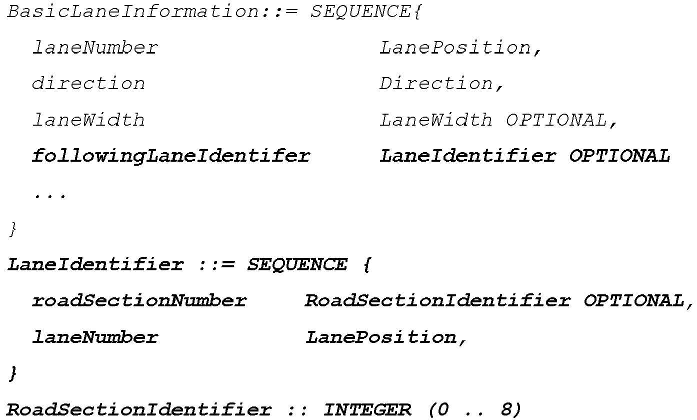

In this case the *roadSectionIdentifier* implicitly assigned to a section is its position in the list RoadConfigurationSectionList of sections.

It is observed that the *roadSectionNumber* parameter is optional if it can be deduced from other information, for example from the traces indicated in the DENM and the traces to section connectivity (each section indicates which traces are included and connected). Accordingly, assuming that each section has at least one trace in *connectedTraces* or one trace in *includedTraces,* or the *isEventZoneConnected* flag is true, or the *isEventZoneIncluded* flag is true, the *roadSectionNumber* parameter may be omitted. Otherwise, if the following section cannot be deduced, it may be explicitly indicated in the *laneIdentifier.*

It is also observed that a unique RCC section identifier may be added to make it possible to reference a section and a lane that are not described in the current message but that are described in a RCC of another message. To that end, a DF *RoadSegmentReferenceld* may be defined in the CDD (Common Data Dictionary for ITS messages, as defined in ETSI TS 102 894) to make it possible to describe a unique identifier for a road segment, for example as follows: 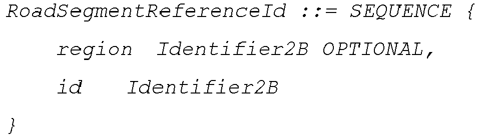 where
*region* is the optional identifier of the entity that is responsible for the region in which the road segment is placed (it is the duty of that entity to guarantee that the identifier is unique within the region) and
*id* is the identifier of the road segment.

Such a DF may be reused to define a section identifier which can be unique in a geographical area independently of the message where it is described, as follows:

```
 RoadSectionIdentifier : : SEQUENCE {
 roadSegmentId RoadSegmentReferenceId OPTIONAL,
 localsectionId Identifier2B
 }
```

The *localSectionId* is an identifier unique for the section inside the road segment.

The *roadSectionNumber* identifier can then be explicitly defined in the section description to give a unique identifier to the section, for example as follows:

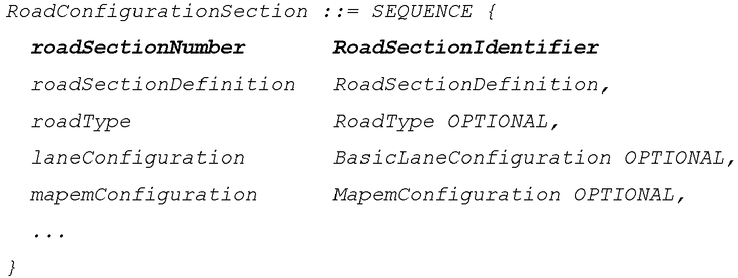

The same DF can then be used in the Laneldentifier described previously to reference a section in the same RCC of the current message or in another message, for example as follows:

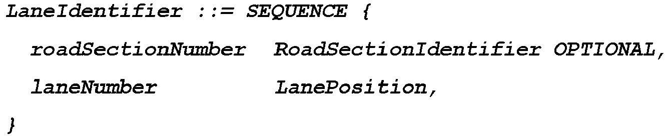

It is observed that following *LaneIdentifier* is optional in the case where the next lane number can be deduced simply, for example if the lane number is the same as the current lane number, or it has the same increment (or decrement) as the previous lane number.

For the sake of illustration and turning back to Figure 4a, the sections may be described as follows:

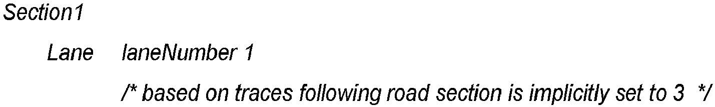

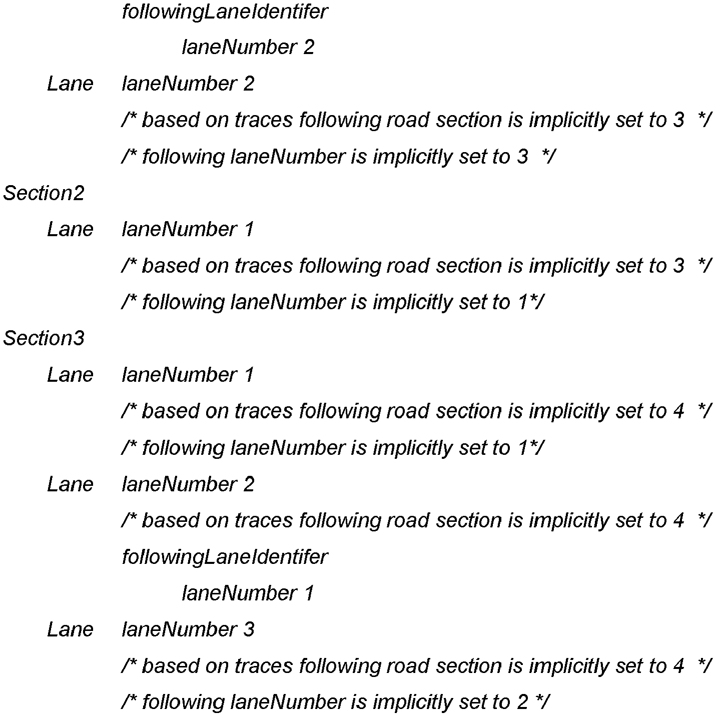

Still for the sake of illustration and turning back to Figure 4b, the sections may be described similarly than for Figure 4a, except for the third section that may be described as follows:

### Sections

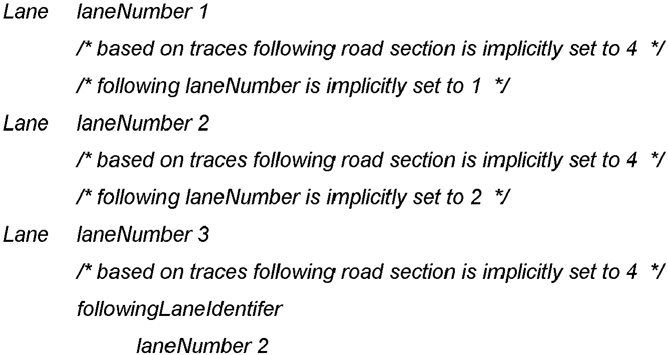

Using such solution for describing change of lane numbers between sections, it becomes possible to indicate to an incoming vehicle whether an event is located in the lane that it will reach if it follows the normal structure of the road, i.e., without maneuvering to change its lane.

According to the previous road descriptions of lanes per sections, all the lanes of all the sections are listed. However, it is observed that that some lane descriptions may be implicitly deduced from the other information. For example, regarding the description of section 3 for the road configuration illustrated in Figure 4b, lane 2 may be skipped in the section description since there is a description of lane 3 and thus, it may be inferred that lane 2 necessarily exists. Therefore, the description of lanes which can be deduced from the other lane descriptions may be removed: if another lane having a higher reference number exists and if the lane description does not provide further information, the lane description may be removed.

Alternatively, it may be possible to impose that a trace is provided for each incoming lane, while removing the constraint according to which each trace should lead to an event. Accordingly, the section lane connectivity can be deduced from the traces. However, this would increase the number of traces to provide, which is currently limited to 7. So this limit should also be increased, for example to 31.

As another alternative, explicit connectivity information may be provided at the level of the section description, for example as follows: 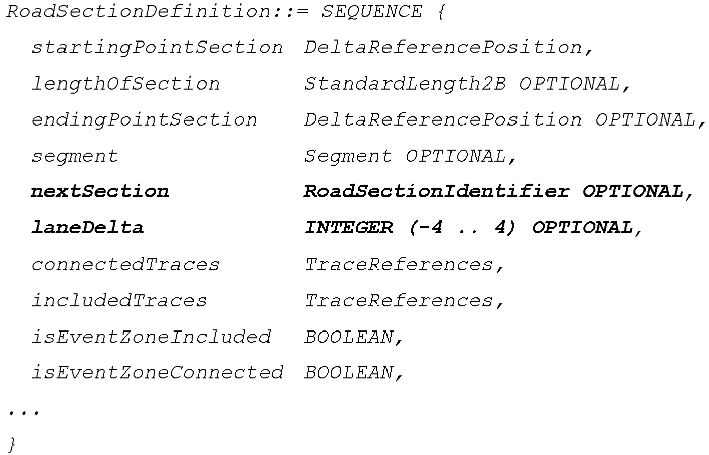 where
*nextSection* indicates explicitly the next section and
*laneDelta* gives explicitly the value to add or remove to the lane number when connecting to the next section.

These values may be used to compute the implicit values for following sections and following lane numbers when there is no explicit indication in the lane description.

While only one following lane is indicated in the previous examples of DE *BasicLaneInformation,* it is possible to have a list of following section lanes.

This could be used for example in the case of Figure 5, to indicate that lane 1 of section 1 may be connected to lanes 1 and 2 of section 2. However, in such a case, one following lane should be indicated as the default following lane so that it is possible to determine a default trajectory of a vehicle, other lanes being accessible through a maneuver from the vehicle. In the example of Figure 5, the default following lane for lane 1 of section 1 is lane 2 of section 2 because of the road marking.

Even if the road marking is not clear, a maximum of one default following lane should be selected in order to be able to compute distances, areas, and trajectories, as described herein below.

It is noted that a lane may have no following lane. This can be the case of a deadlock or this could be used to represent a road configuration like the one illustrated in Figure 6 (lane 3 of section 3). This may be useful to indicate that an explicit maneuver is necessary (for example to change from lane 3 of section 3 to lane 2 of section 4 in Figure 6).

It may also be of interest to identify explicitly the previous section lane or lanes. In most of the cases, the previous lane can be computed from the following lane indication. However, the previous lane may be indicated and the following lanes may be computed based on these indications. It is observed that when computing previous lanes, several previous lanes may be connected to the same lane. For example, in the road configuration illustrated in Figure 6, line 2 of section 4 has two previous lanes. It may be advantageous to define one default previous lane, for example to make it possible to compute negative distance or past trajectories of vehicles as described herein below.

It is also possible for a lane to have no previous lane (e.g., lane 1 of section 2 in Figure 5).

Using connections between section lanes, it is possible to define a multi section lane as a list of lanes of different sections which are connected together, being noted that it is not necessary that all section lanes are connected or that the connections are unique. Two objects and/or events may thus be located on the same multi section lane if it exists a section lane connectivity between the two objects and/or events allowing going from the position of a first object or event to the position of the second object or event, by respecting the direction of the multi section lane.

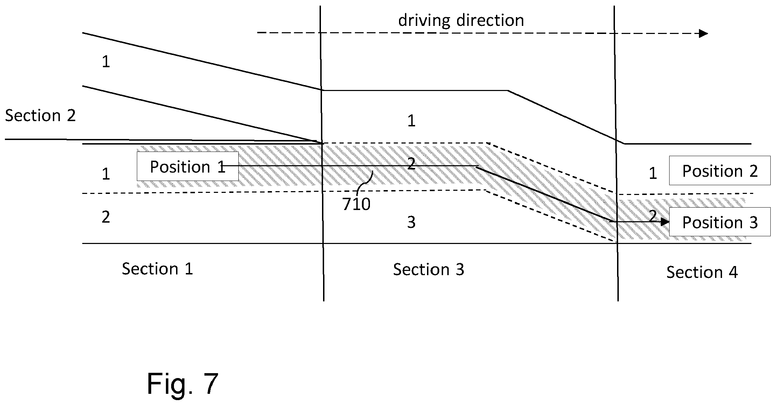

**Figure 7** illustrates an example of a road configuration where multi section lanes may be defined and where two objects and/or events are located on the same multi section lane.

As illustrated, the objects and/or events located at positions 1 and 3 are located on the same multi section lane represented with hatching. Such information may be used, for example, to predict that a vehicle located at position 1 is likely to reach position 3, such trajectory prediction not being based on the dynamic of the vehicle but mainly on the configuration of the road, as described in the improved version of the RCC. A vehicle located at position 1 and receiving a DENM containing an improved RCC describing the road configuration and the indication of an event located at position 3 may determine that it is concerned. This improved RCC version makes it possible to generate relevant warning messages, to modify the behavior of the ADAS (Advance Driver Assistance System), or, for an autonomous vehicle or for a vehicle with a high automation level, to decide to maneuver to stop the vehicle, to change of lane, or to change of automation mode (e.g., to ask the driver for help).

Using the *lanePosition* container together with the *IsEventZoneIncluded* flag of the section description, it is possible to know in which section and which lane an object or an event zone is located. Additional information may be provided for locating an object or an event more precisely. In particular, a DF *RCCPosition* may be used to describe the position of an object or an event within a RCC, for example using the DF *longitudinalLanePosition* defined in the CDD and used in the MAP message to define a distance. Since some events may occupy more than one lane (e.g., an accident or a road work on 2 lanes), a new field denoted *laneWidth* may be used to describe the number of lanes occupied by the event.

The DF *RCCPosition* may be used to indicate the exact position of an object or an vent relatively to the section and lane structure. Therefore, the position of an event in a multi section lane may be defined as follows:

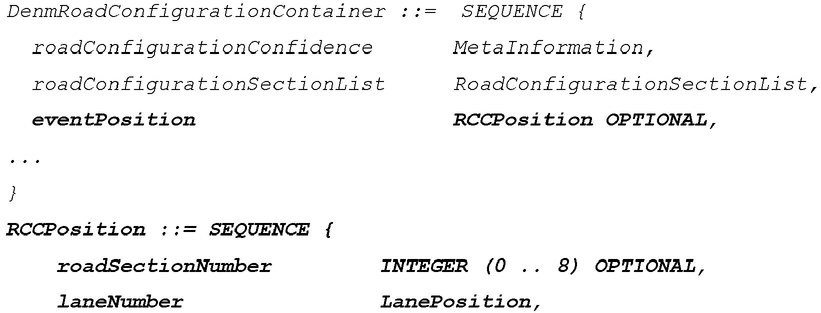

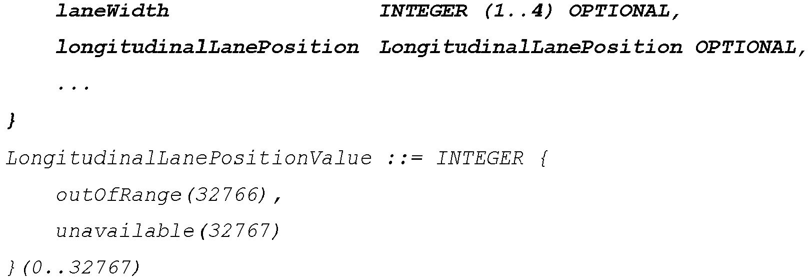

Using the lane information disclosed in ITSWG1(23)0630002r1 and in ITSWG1(23)0630001r1, the list of lanes described in the DF *OccupiedLanesWithConfidence* may be used to replace the *laneNumber* and *laneWidth,* as follows:

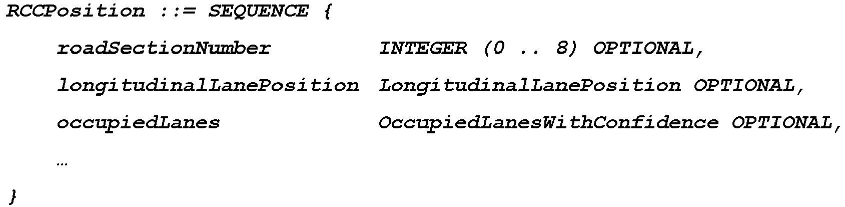

The following DF *OccupiedLanesWithConfidence* may be used to provide the list of lanes occupied by the event with optional information such as the type of lane:

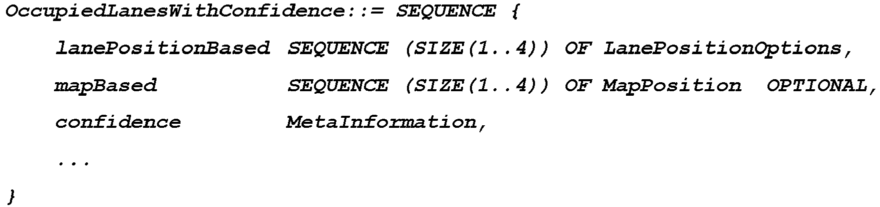

If a section identifier that is unique in a geographical area is used, a position referring to a section which is described in a road configuration container included in another message may be used:

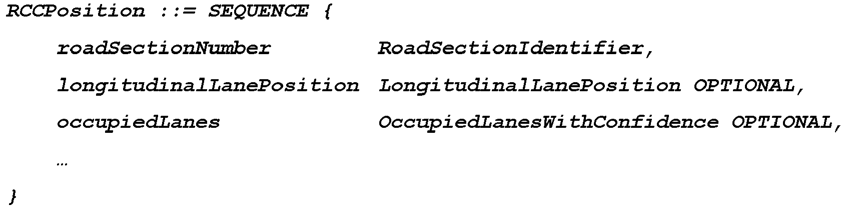

Since the *LongitudinalLanePositionValue* may be too limited in distance to indicate position in long sections, a new DF may be defined as follows:

```
 LongitudinalLanePositionValueL ::= INTEGER {
     outOfRange (131070),
     unavailable (131071)
 } (0..131071)
```

Alternatively, the same DF *LongitudinalLanePositionValue* may be used, but with a lower resolution.

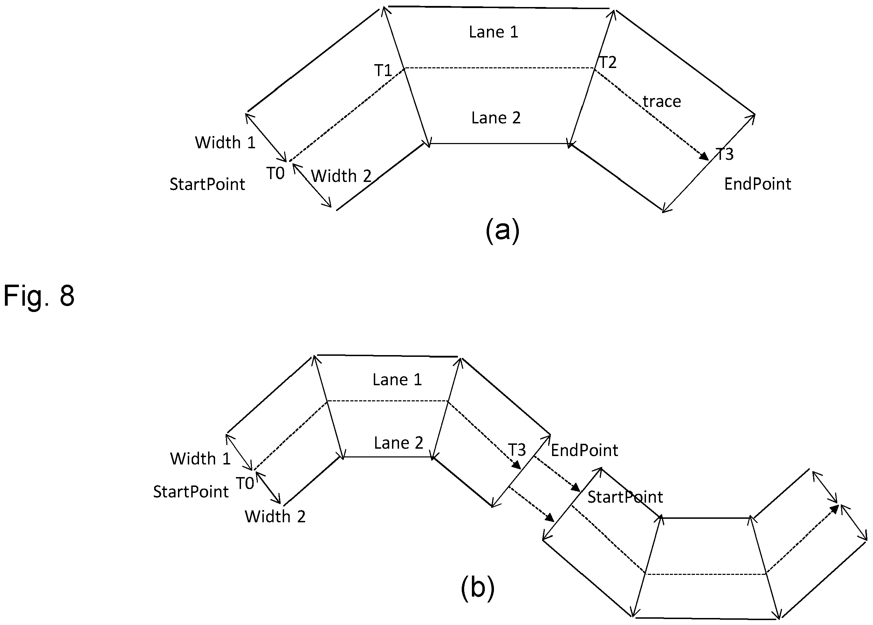

It is then possible to define a distance between two positions in a multi section lane, the distance being the length of the path from the first position to the second position. It may be computed as the length from the first position to the end of the section lane comprising the first position, added to the length of all intermediary section lanes, the length of all connections between section lanes, and the length from the beginning of the section lane comprising the second position to the second position, as described by reference to Figure 8. Such a distance may be computed even if there are multiple following section lanes or previous section lanes.

Since an event may be associated with a road area (e.g., road works, road surface conditions, or a traffic jam), it may be useful to describe an area in a DENM, for example by providing its start position and its end position with regards to one or more lanes and one or more sections. For example, it may be needed to describe the hatched area in Figure 7, starting from position 1 in lane 1 of section 1 and ending at position 3 in lane 2 of section 4.

Such an area may be defined as being the interval being two points, as follows

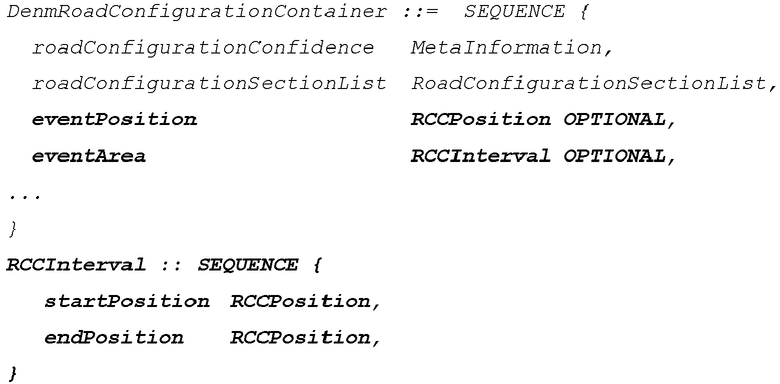

In such a case, the *eventArea* defines simultaneously the position of the event (i.e., the *startPosition*) and the end of the area of the event. The two positions should be located on connected lanes.

Alternatively, assuming that the section lane connectivity is such that a section lane is connected to a single lane or to one or more lanes comprising a default lane, the end of the area may be defined using a distance (710) that represents the end of the area. This can be defined by using the following structure in the RCC container:

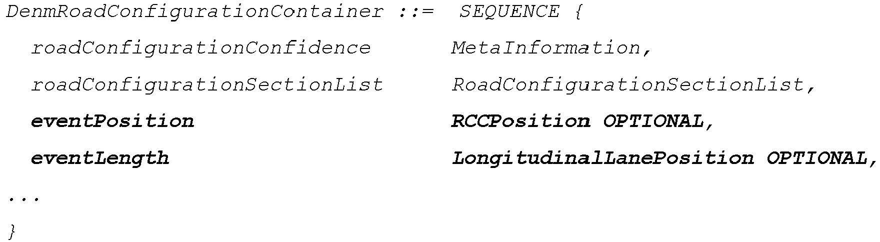

In such a case, the event length should be computed as the distance between the first and the second positions, following the structure of the section and lanes between the two positions.

Since it is not necessary to indicate the end point section identifier and lane number, such a representation is compact. Moreover, it reduces the risk of incorrect messages since it is not possible to indicate a destination point which is not on the same multi section lane as the start point.

Alternatively, a DF *RCCInterval* may be defined with a start point and a positive distance, for example as follows:

```
 RCCInterval :: SEQUENCE {
   startPosition RCCPosition,
   endPosition LongitudinalLanePosition,
 }
```

The *eventArea* field of the *RCCInterval* type defined previously in the *DenmRoadConfigurationContainer* may be used to define the area of the event.

It is also possible to use a negative value for the distance so as to define the end point of an area and a distance from this end point. This type of area may be used to represent a trace in a DENM, a trace being generally a path which leads to the event signaled in the DENM. With a structure of section lane connectivity allowing multiple previous section lanes for a lane, multiple paths leading to an event may be obtained with only one distance information, for example using the following message structure:

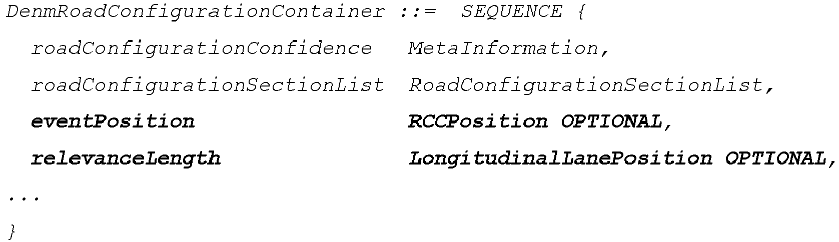

The *relevanceLength* may be interpreted as the distance before the event (which may be considered as a negative distance).

For the sake of illustration and turning back to Figure 6, an event occurring in position 3 may be signaled by creating a relevance area having a given distance, for example -1000m, from the event point. In such a case, two multi section lanes are part of this area:
- lane 1 of section 1, lane 2 of section 3, and lane 2 of section 4 and
- lane 2 of section 1, lane 3 of section 3, and lane 2 of section 4.

This structure is thus well adapted to represent multiple paths leading to a position in a compact way.

Assuming that the section lane connectivity has a maximum of one previous lane for each lane (or a default previous lane), a negative distance may be used to define a unique path leading to a final destination. This structure may be used to represent one trace in a DENM. The last point of the trace is a point before reaching the section lane of the event and a negative distance makes it possible to describe the trace along a multi section lane in much more compact form than current trace description composed of multiple points. To that end, a message may use the following syntax: 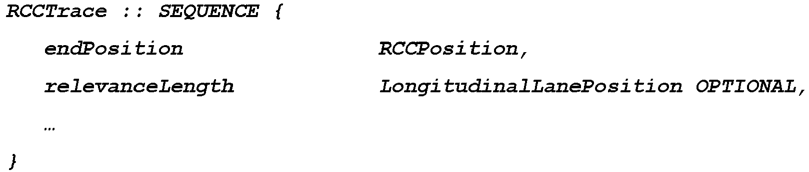 where the *relevanceLength* may be interpreted as the distance before the *endPosition* (i.e., as a negative distance).

This structure is easy to understand and thus easy to manage by an operator willing to define the relevance areas for a DENM.

In order to compute correctly lengths and distances, a correct representation of the geometry of the sections, the section lanes, and the connections between section lanes are needed. According to the RCC proposed in ITSWG1(23)063012, the section geometry is defined as follows: 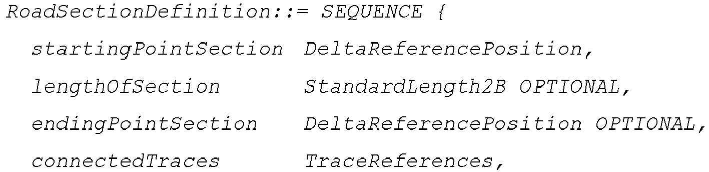 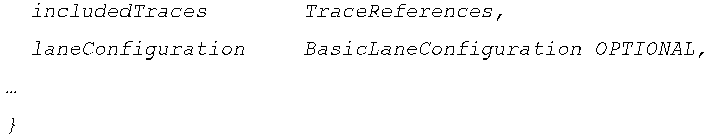 with a set of lanes defined as follows:

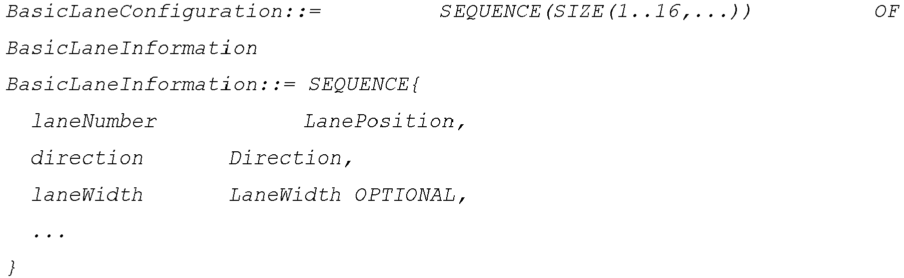

Such a syntax makes it possible to compute the geometry of section lanes in simple cases, for example for the road configuration illustrated in Figure 8a.

**Figure 8** illustrates example of section lanes.

As illustrated in Figure 8a, waypoints T0, T1, T2, and T3 provide the profile of sections. By summing the width of the lanes, the width of a section may be obtained.

The normal to vector T0-T1, at start point T0, and to vector T2-T3, at end point T3, give the direction transverse to the section at its start and end. To obtain the direction of the transverse of the section at point T1, the sum of vectors T1-T2 + T1-T0 may be used. The same method gives the direction at point T2. The width of each lane may be used to compute the geometry of each lane: starting point of the lane (the middle of the beginning of the lane), end point of the lane (the middle of the end of the lane), and the length of each section.

A first difficulty may arise when a trace is not available for each section and/or when a trace is not located in the middle of the section. To cope with such a difficulty, the middle of the section may be defined as a polynomial line (similarly the method used to define areas in IVIM and MAPEM messages). The line element in the *RoadSectionDefinition* could be added optionally to describe explicitly the middle line of the section if the width of each lane is fixed in the whole section. Another difficulty may arise for lanes having variable size in the section.

According to some embodiments of the disclosure, a more precise description of the geometry of a section is provided, for example by providing the size of each lane for each point of the middle line of the section. The *sectionGeometry* is an alternative to the *polygonalLine* with a more precise description of the section geometry. All these items of information are optional and should be used only when there is a need to describe a complex section structure, for example as follows:

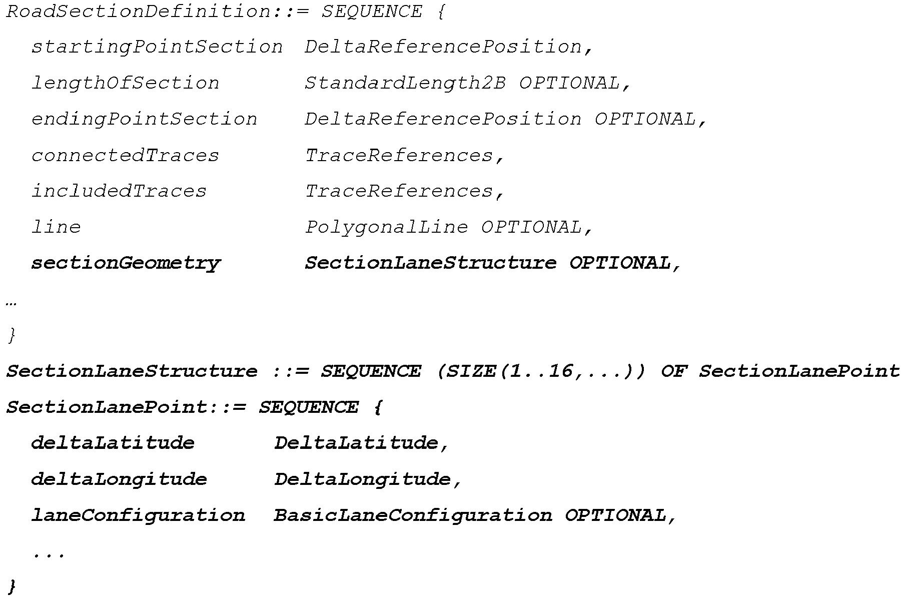

By definition the number of lanes is fixed in a section, but the width of the different lanes may be modified. Only the lane with a modified width may be indicated to optimize the size of the messages.

As illustrated in Figure 8b, when creating a connection between two section lanes, a connection between the end point of the first section lane and the start point of the second section lane is created. This connection has a very small length but, in some cases, it may have a length which may not be negligible. Indeed, in some cases the section lanes may be separated by an area with no clear lanes: for example, in an intersection, the middle area can be seen as a conflict zone with no lanes. This area with no lanes does not prevent the definition of a multi section lane going through this area by using a connection with a given length, for example a length of several meters.

The lane width values are optional. If this information is not present, the precise geometry of the section cannot be computed. However it may be approximated by using the length of the section for each lane and the start point and end point of the section for each lane. The approximation is less precise than the exact geometry but it may be sufficient for some simple cases and depending of the type of warning to generate.

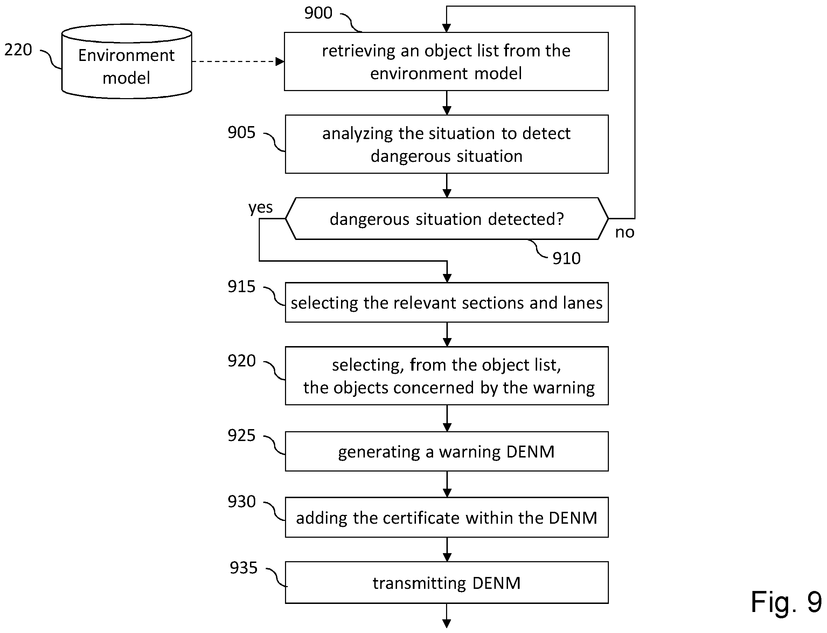

**Figure 9** schematically illustrates, using a flowchart, an example of steps of a communication method for transmitting DENMs comprising an improved RCC according to some embodiments of the disclosure. These steps may be carried out by a situation analysis module, for example the situation analysis module 240 in Figure 2.

As illustrated, a first step is directed to retrieving a list of objects from the environment model (step 900), for example environmental model 220 in Figure 2. If the emitting ITS-S is a road side ITS-S, it may have an up-to-date description of the structure of the road in a local database. This structure can contain the sections and lanes and connectivity between section lanes. This is part of the environment model.

If the emitting ITS-S is embedded in a vehicle, the structure of the road may have been detected by the sensors of the vehicle for example cameras which have detected the lane marking on the road. The structure detected by the sensors may be compared and merged to the map stored in the vehicle. Previous road configuration received in other ITS messages can also be compared and merged to the road structure computed by the vehicle.

Based on the detected objects and situations and on the predicted trajectories of the objects, the situation analysis module performs a risk analysis (step 905). If a risk (event) is detected (step 910), the sections and lanes that are relevant for the event are selected (step 915). Next, the objects concerned by the event are selected from the object list (step 920) in order to prepare the generation of a DENM.

Next, a DENM warning content is prepared (step 925), with the inclusion of a management container, Situation Container, a Location Container. The ITS-S may decide to use a new road configuration container which is then included in the DENM or it may decide to use one or several previous RCCs already exchanged between the road participants. In this case, the positions are encoded in reference to the identifier of sections and lanes from the RCCs in the other messages. The ITS-S may also decide to use a new RCC but use some elements from previously exchanged RCCs. The positions may then reference the RCC of the current message or road elements from other messages.

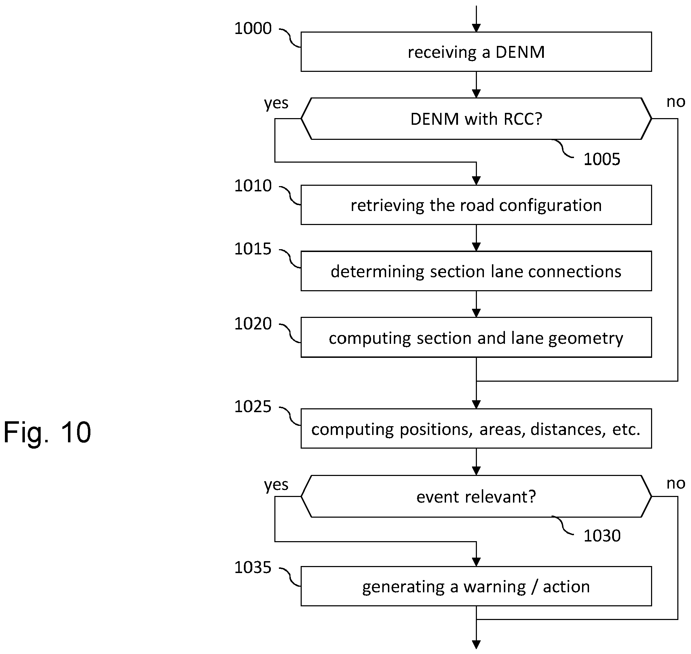

Next, the ITS certificate (e.g., certificate 330 in Figure 3) is added within the DENM (step 950) and the DENM is transmitted (step 960) by an ITS-S module, for example the ITS-S module 112 in Figure 1. It is received by one or more receiving ITS-S and may be processed as described by reference to Figure 10.

**Figure 10** schematically illustrates, using a flowchart, an example of steps of a communication method for receiving a DENM comprising an improved RCC according to some embodiments of the disclosure.

Upon receiving a DENM (step 1000) and after having determined whether the received DENM comprises an improved RCC according to some embodiments of the disclosure (step 1005), the receiving ITS station retrieves the road configuration (step 1010). Next, the receiving ITS station determines the section lane connections (step 1015, as described by reference to Figure 6.

Next, the receiving ITS-S computes the section and lane geometry (step 1020), as described by reference to Figure 8, to compute the length of all section lanes and connections between section lanes.

Next or if the received DENM does not comprise an improved RCC according to some embodiments of the disclosure, the receiving ITS-S may compute positions, areas, and/or distances in multi section lanes between different described positions (step 1025), as described by reference to Figure 7, based on the received RCC either in the new message or previous messages if required.

These distances and structure of multi section lanes may then be used by the receiving ITS-S to determine whether the event is relevant for a vehicle (step 1030).

If the event is relevant and if the receiving ITS-S is a vehicle, the receiving vehicle can display warning information to the driver, change the behavior of the ADAS (Advance Driver Assistance System), or, if the vehicle is an autonomous or a highly automated vehicle, decide to take a maneuver such as stopping the vehicle, changing of lane, or change of automation mode (e.g., ask the driver for help).

If the event is relevant and if the receiving ITS station is a road side unit, it can take decision to create new V2X messages. For the sake of illustration, it may generate DENMs to warn other vehicles (for example with a pre-crash DENM warning). It can also integrate the signaled events in CPM messages. It may also decide to change the signalization on the road to display information to other vehicles and it may also report the information to a control center to inform road authorities.

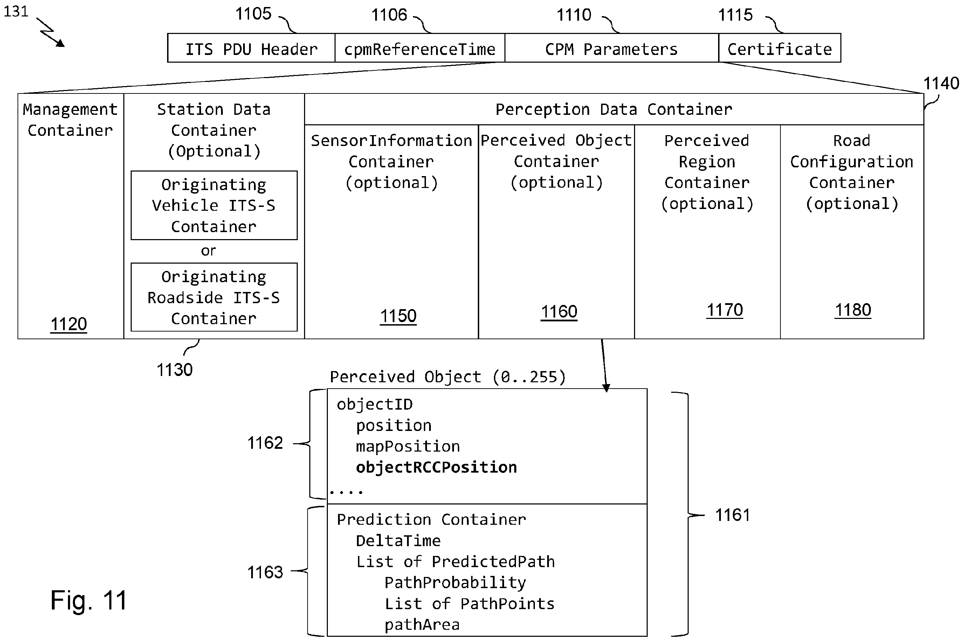

**Figure 11** illustrates an example of a structure of a collective perception message, CPM, for example CPM 131 in Figure 1, according to some embodiments of the disclosure.

The illustrated CPM structure is based on ETSI TS 103 324 Specification. It comprises an ITS PDU header referenced 1105, a CPM reference time referenced 1106, a "CPM Parameters" field referenced 1110, and a "Certificate" referenced 1115.

ITS PDU header 1105 is a common header that includes the information of the protocol version, the message type, and the ITS-S identifier (ID) of the originating ITS-S.

CPM reference time (*cpmReferenceTime*) field 1106 is the absolute reference time of the message.

"CPM Parameters" field 1110 contains a management container referenced 1120, an optional station data container referenced 1130, a perception data container referenced 1140 containing a set of optional sensor information containers referenced 1150, a set of optional perceived object containers referenced 1160, and a set of optional Perceived Region Contained referenced 1170. According to some embodiments of the disclosure, perception data container 1140 further comprises one or more improved Road Configuration Containers referenced 1180.

Each container includes some data elements (DE) and/or data frames (DF). ETSI TS 102 894-2 CDD Specification defines conventional data elements and data frames used in ITS messages.

Regardless of the type of the ITS-S generating the considered CPM, the management container provides information regarding the station type and the reference position of the originating ITS station. The message can be transmitted either by an ITS station, such as a vehicle, or by a stationary RSU. In case of a CPM generated by a vehicle, the station data container contains the dynamic information of the originating ITS station. It is not optional in case of a vehicle transmitting the CPM. In case of a CPM generated by an RSU, the station data container may provide references to identification numbers provided by the MAP Message (CEN ISO/TS 19091) reported by the same RSU. These references are required in order to match data provided by the CPM to the geometry of an intersection or road segment as provided by the MAP message. It is not required that a RSU has to transmit a MAP message for matching objects to road geometries. In this case, the station data container may be omitted. It is for this reason that the station data container is set as optional.

The sensor information container 1150 that is optional, contains the set of sensor information. It provides information about the sensory capabilities of an ITS station. Depending on the station type of the originating ITS station, different sensor information specifications are available to encode the properties of a sensor. The sensor information container is attached to CPMs at a lower frequency than the other containers, as defined in ETSI TR 103 562. Up to 128 sensor information may be used in a CPM.

The perceived object container 1160 that is optional, contains a set of perceived objects 1161. It is composed of a sequence of optional or mandatory data elements (DEs) and/or data frames (DFs) which give a detailed description of the dynamic state and properties of a detected (or perceived) object.

More precisely, each object has to be described using the dedicated perceivedObject structure referenced 1161. The first part of this structure (reference 1162) contains data elements and/or data frames as defined by the ETSI TS 103 324 and comprises various fields including the following:
- *objectID:* this data element is an identifier assigned to a perceived object. It remains constant as long as the object is perceived by the originating ITS-S,
- *measurementDeltaTime*: this data element corresponds to the time difference for the provided measurement information with respect to the CPM reference time 1106,
- the position defined by *xCoordinate, yCoordinate,* and *zCoordinate* (optional): it corresponds to the absolute position of the perceived object, for the time of measurement,
- the velocity defined by *xSpeed, ySpeed* and *zSpeed* (optional): it corresponds to the speed of the perceived object in the x, y, z-direction, respectively, for the time of measurement,
- the acceleration (optional) defined by *xAcceleration, yAcceleration,* and *zAcceleration:* it corresponds to the acceleration of the perceived object in the x, y, z-direction, respectively, for the time of measurement,
- the dimension (optional) defined by *planarObjectDimension1, planarObjectDimension2,* and *verticalObjectDimension:* it represents the dimension of the perceived object,
- *objectAge:* it is the age of the perceived object,
- *objectConfidence:* it is the confidence level associated with the perceived object. The computation of the object confidence level may be based on a sensor's or merging system confidence, on the binary detection success (i.e. the detection success of the object during the last measurements), and on the object age,
- *sensorlDList* (optional): it is the list of sensor identifiers which provided the measurement data. It refers to *sensorID* in the sensor information container. If the sensor information container is never provided by the originating ITS-S, the list may be populated with random numbers, where each number is assigned to a sensor of the originating ITS-S,
- *classification* (optional): it provides the classification of the perceived object. It is composed of an object class and possibly a subclass (e.g. vehicle class has subclasses passengerCar, bus, etc.) with a class confidence value, and
- *mapPosition,* (optional): it indicates the position of the perceived object mapped onto the intersection topology description transmitted in MAP messages.

According to some embodiments of the disclosure, an additional item of information may be added:
- *objectRCCPosition* (optional): this field indicates the position of the perceived object in a Road Configuration Container. It can use the structure *RCCPosition* (described by reference to Figure 7) which indicates the identifier of the section and the lane number(s) of the perceived object by reference to the RCC contained in the current CPM message or in another V2X message.

Perceived Region container 1170 that is optional, contains the set of perceived regions information. It comprises a sequence of optional or mandatory data elements (DEs) which provide information about perceived regions detected by a particular sensor. Each perceived region comprises various fields such as:
- *perceptionRegionConfidence:* this field provides the confidence value that applies to the entire area,
- *perceptionRegionShape:* this field provides the geometry of the perceived region area,
- *sensorIDList:* this field provides a list of identifiers of the sensors which performed the measurement to indicate the free space, and
- *shadowingApplies:* this field is a Boolean indicator used to indicate whether a tracing approach should be used to compute a shadowed area behind an object.

According to some embodiments of the disclosure, an additional item of information may be added
- *regionRCCArea* (optional): this field indicates the area of the perceived region in a Road Configuration Container. It can use the structure *RCCInterval* (described by reference to Figure 7) which indicates the area in relation to a multi section lane by reference to the RCC contained in the current CPM message or in another V2X message.

It is noted that collective perception messages as described in TS 103 324 with the items of information contained in data structure 1162 for *perceivedObject* allows the reporting of the current state of an object.

The items of information contained in the data structure 1163 is a prediction container that allows the reporting of information related to the future state of an object. This container is not included in current TS 103 324 but it could be added in future versions.

The prediction container data structure 1163 comprises various fields such as:
- *DeltaTime*: this field provides the delta time between each point in a predicted path (e.g. a predicted path can contain points spaced by 100 ms),
- list of *PredictedPath:* one object can have several predicted paths (the number of paths can be up to 3 for instance), each predicted path containing:
   ∘ *PathProbability:* the probability associated with the predicted path;
   ∘ list of *PathPoints:* a predicted path can have several points (the number of points can be up to 10 for instance, each path point is defined by:
      ▪ *XDistanceOffset, YDistanceOffset:* distance measured from the CPM reference point in the x- and y- directions of the ITS-S coordinate system and
      ▪ optional covariance information for each point can be included with *XConfidence, YConfidence* and *Correlation.*

According to some embodiments of the disclosure, a different representation of a predicted path could be used for some paths:
- *PathArea* is the predicted path following the multi section lane from the current position of the object for a defined distance. This field can use the type *RCCInterval* (as described by reference to Figure 7).

According to some embodiments of the disclosure, another Road Configuration Container 1180 can be added to the CPM message.

The road configuration container described by reference to Figure 4 may be used with a few modifications:

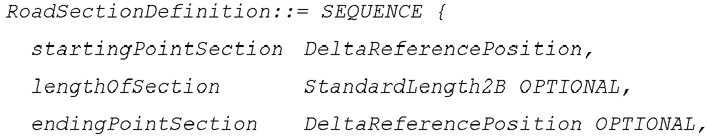

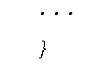

The elements *connectedTraces, includedTraces, isEventZonelncluded,* and *isEventZoneConnected* should be removed because the elements trace and event zone have no meaning in a CPM.

To obtain the same effect and by using the ASN.1 syntax, these optional elements optional may be defined as follows and their absence may be forced when including the Road Configuration Container in the CPM:

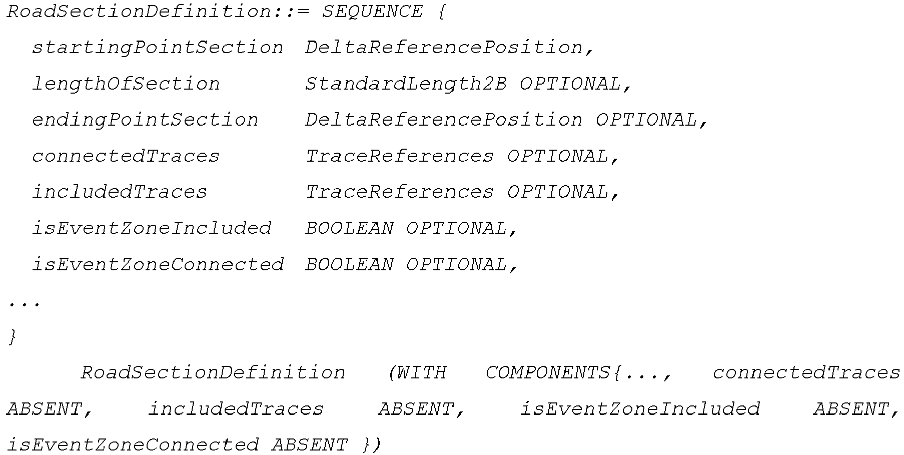

As described above, the Road Configuration container has recently been proposed (ITSWG1(23)000082) to complete the DENM ( ETSI TS 103 831 V2.1.1 ) in order to provide a simple description of the configuration (number and type of lanes) of the road where a hazardous event occurs. It makes it possible to associate the position (eventPosition) or the zone (e.g. eventZone) where the event is detected, and optionally the lane(s) where the event occurrence is announced in the DENM (lanePosition À La Carte container).

The road configuration container allows information on the road structure to be provided to all ITS-S without needing the receiving ITS-S to derive information from a digital map database. The shared information is also up to date and can take into account recent modifications of the road structure (e.g. in case of lane changes due to road work or an accident).

However, in its current description the Road Configuration Container has some limitations: it may be difficult to compute the changes of lanes between sections. It would also be useful to improve the description of the position for an event in terms of a distance and width and finally it is proposed a new definition of an area in term of lane which could be used to complement the relevance area for an event.

Accordingly, the lane number can change from one section to the following. In the example of Figure 4a, the section 1 lane 1 becomes the section 3 lane 2 and then section 4 lane 1.

In Figure 4b, because of a different lane connectivity, the section 3 lane 2 becomes the section 4 lane 2.

If no explicit indication is given, it may be difficult for an incoming vehicle (for example in position 1) to determine if an event (for example in position 2) is located on a lane connected to its current lane. So, this seems to be contradictory with the objective of the RCC to provide indication to the receiving system to indicate on which of the existing lane(s) the hazard occurs.

The traces may be used to compute the section connectivity if at least one trace is provided for each section. In Figures 4a and 4b the traces 1 and 2 can be used to compute the section connectivity. In these examples the section 3 will indicate that the traces 1 and 2 are connected, while section 2 (resp 1) will indicate that the trace 1 (resp 2) is included.

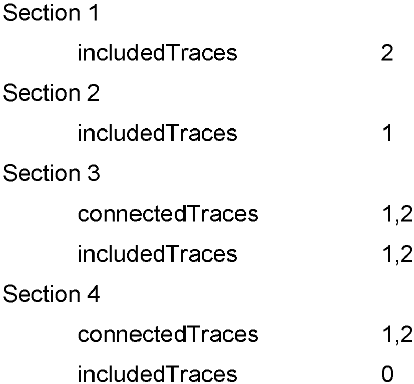

However, this is not sufficient to compute the lane connectivity between sections in any case. The first limitation is that the traces are optional and may not be always provided. The second limitation is that it could be useful to indicate sections in the RCC which may be impossible to connect to traces.

For example, in Figure 5, the section 4 seems difficult to connect: indeed, the trace 1 cannot be defined in current DENM because it does not lead to the event position (position 1) (see clause B.51 of TS 103 831 v2.1.1). So, the section connection between section 2 and section 4 seems difficult to compute.

In order to overcome the previous issues and fulfil the objective of the RCC, it is proposed to add an explicit indication of the following section lane number in the lane information.

Here is the proposed ASN.1 syntax to indicate the lane connectivity added to the road configuration container. The difference with current syntax is in bold.

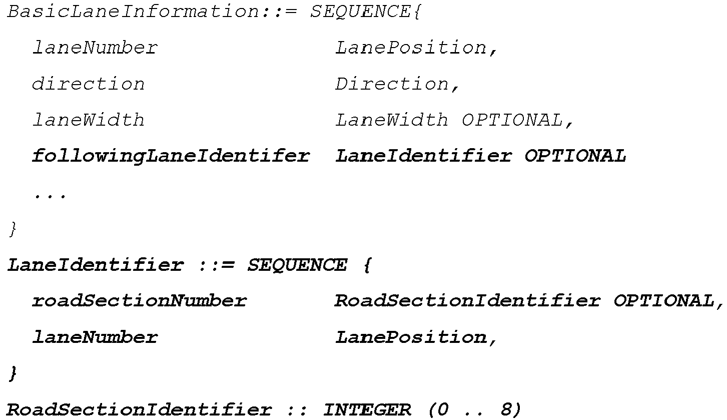

The roadSectionNumber of the following lane identifier is optional, if it can be deduced from other information. For example, from the traces indicated in the DENM and the traces to section connectivity: each section indicates which traces are included and connected. So if it is assumed that each section has at least one connectedTrace or one includedTrace or the isEventZoneConnected flag at true or isEventZonelncluded flag at true, the roadSectionNumber can be omitted. Otherwise, if the following section cannot be deduced, it may be explicitly indicated in the followingLaneldentifier.

The followingLaneldentifer is optional in case the next lane number can be deduced simply: for example, if the lane number is the same as the current lane number, or it has the same increment (or decrement) as the previous lane number.

For example, in Figure 4, the sections would be described as:

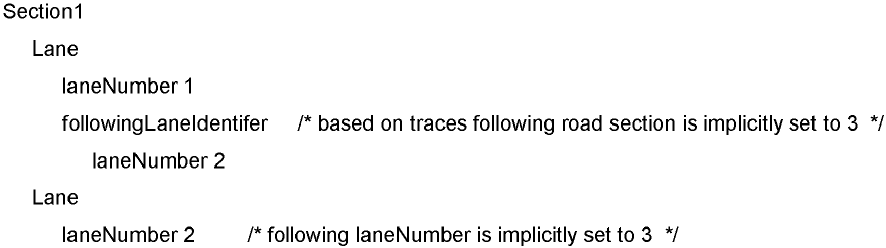

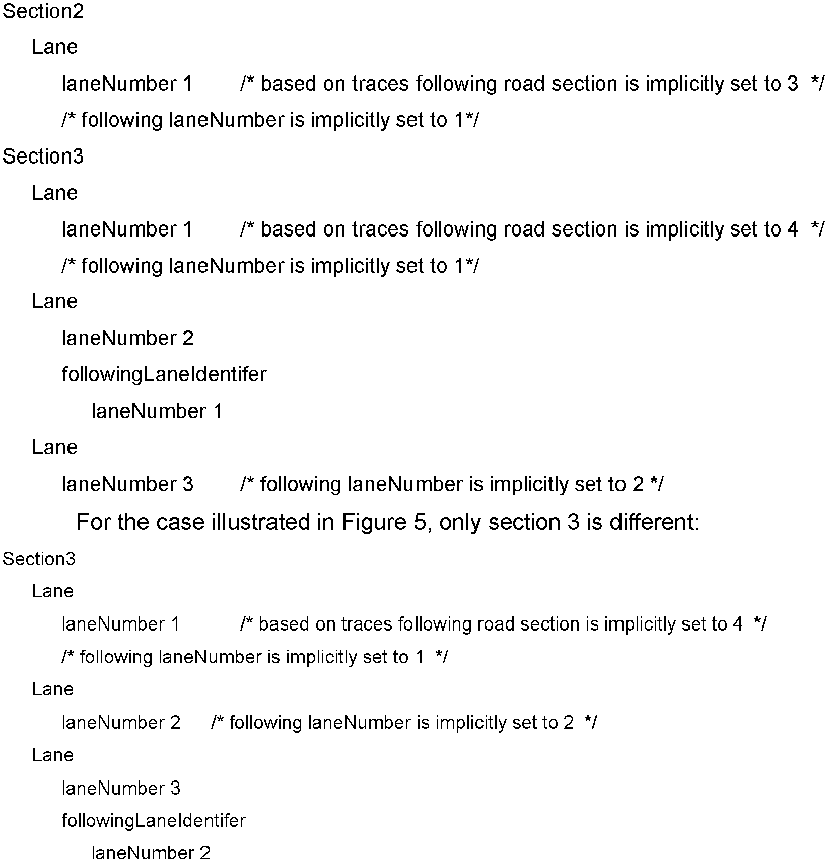

With this indication of lane number change between sections, it becomes possible to indicate to an incoming vehicle if an event is located in the lane that it will reach if it follows the normal structure of the road i.e., without a manoeuvre to change its lane.

For example, in the case of Figure 4, the vehicle in position 1 could signal to its driver that a broken vehicle in position 2 is located on the same lane. In the case of Figure 5, the same vehicle in position 1 could indicate that the broken vehicle in position 2 is on an adjacent lane.

When a RCC is included in a DENM, the position of the event can be indicated by reference to the RCC by using the lanePosition container. It makes it possible to know in which lane the event is positioned.

However, there is no indication of the section containing the event and longitudinal position of the event in the section. It would be interesting to allow an event to be positioned at a position which does not match the start of a section. In particular for DENM generated by the infrastructure, the list of sections can be deduced statically in advance from the road structure. If the RCC sections must also match the event position, the structure of the RCC sections cannot be computed in advance and is more complex to compute.

So, it is proposed to define the DF RCCPosition and use it to position the event in the RCC. The definition of DF *longitudinalLanePosition* which is already defined in the CDD and used in the MAP message to define a distance in unit of 0.1 meter is recalled. The field longitudinalLanePosition may thus be used to indicate precisely the distance of the event in the section.

Some events may occupy more than one lane (e.g., an accident or a road work on 2 lanes). In these cases, a new field laneWidth may be used to describe the number of lanes occupied by the event.

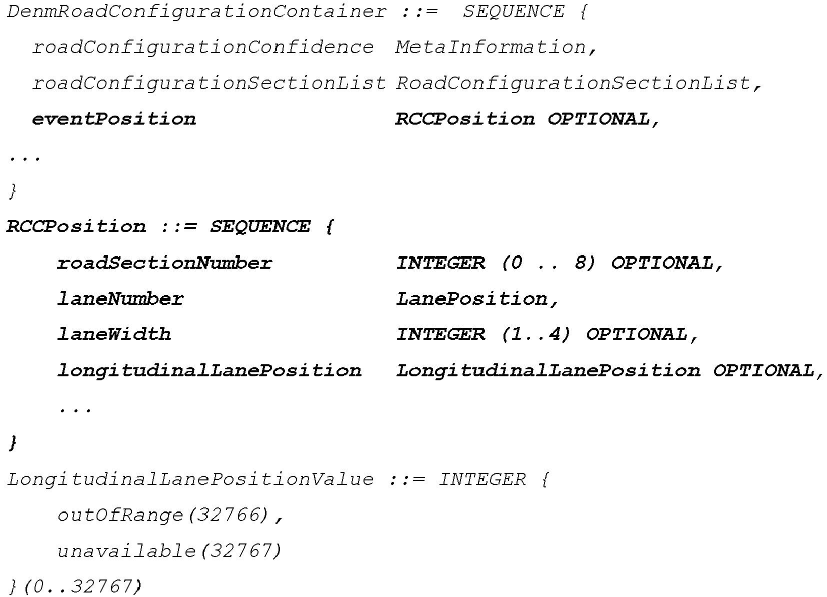

If the lane information proposed in contribution ITSWG1 (23)0630002 is used, the list of lanes described in the DF OccupiedLanesWithConfidence may be used to replace the laneNumber and laneWidth

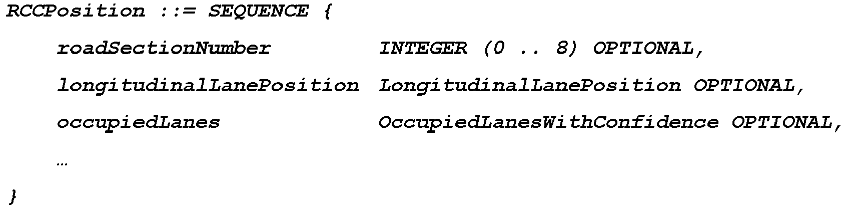

An event may also occupy an area which could be interesting to define in terms of lanes and not only as a list of points (as in the eventzone). This could be useful for example to better define the area of road works or road surface condition or a traffic jam.

But it is to be taken into account that the event area could be split on several sections.

For example, in Figure 7, it may be of interest to define an area starting at position 1 in the lane 1 of section 1 and finishing at the position 3 in the lane 2 of section 4. This can be defined by using the following structure in the RCC container:

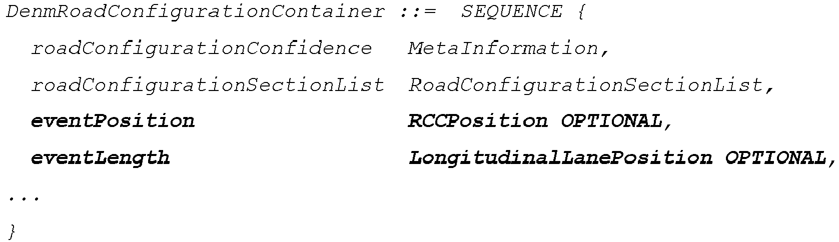

The event length should be computed as the distance between the position 1 and the position 2 following the structure of the section and lanes between the 2 positions.

Therefore, three optional additions to the Road Configuration Container are proposed:
- an explicit description of the connectivity between lanes in sections
- the event position in its section including a longitudinal distance
- an event length

### Example of a hardware to carry out steps of the method of embodiments of the present disclosure

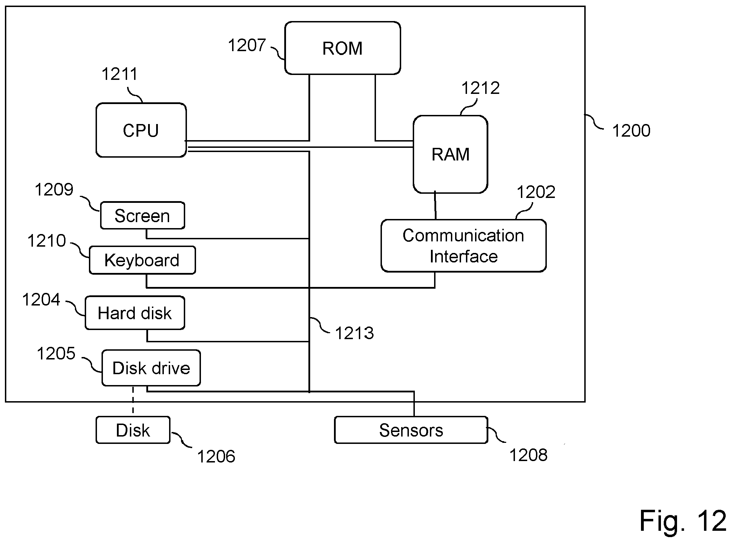

**Figure 12** is a schematic representation of an example of a communication ITS-S device configured to implement some embodiments of the present disclosure. It may be either an ITS-S embedded in a vehicle or a Road Side Unit.

The communication device 1200 may preferably be a device such as a microcomputer, a workstation or a light portable device embedded in a vehicle. The communication device 1200 comprises a communication bus 1213 to which there are preferably connected:
- a central processing unit 1211, such as a microprocessor, denoted CPU or a GPU (for graphical processing unit);
- a read-only memory 1207, denoted ROM, for storing computer programs for implementing some embodiments of the disclosure;
- a random access memory 1212, denoted RAM, for storing the executable code of methods according to embodiments of the disclosure as well as the registers adapted to record variables and parameters necessary for implementing methods according to embodiments of the disclosure; and
- at least one communication interface 1202 connected to the radio communication network over which ITS messages are transmitted. The ITS messages are written from a FIFO sending memory in RAM 1212 to the network interface for transmission or are read from the network interface for reception and writing into a FIFO receiving memory in RAM 1212 under the control of a software application running in the CPU 1211.

Optionally, the communication device 1200 may also include the following components:
- a data storage means 1204 such as a hard disk, for storing computer programs for implementing methods according to one or more embodiments of the disclosure;
- a disk drive 1205 for a disk 1206, the disk drive being adapted to read data from the disk 1206 or to write data onto said disk;
- a screen 1209 for serving as a graphical interface with the user, by means of a keyboard 1210 or any other pointing means.

The communication device 1200 may be optionally connected to various peripherals including perception sensors 1208, such as for example a digital camera, each being connected to an input/output card (not shown) so as to supply data to the communication device 1200.

Preferably the communication bus provides communication and interoperability between the various elements included in the communication device 1200 or connected to it. The representation of the bus is not limiting and in particular the central processing unit is operable to communicate instructions to any element of the communication device 1200 directly or by means of another element of the communication device 1200.

The disk 1206 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the disclosure to be implemented.

The executable code may optionally be stored either in read-only memory 1207, on the hard disk 1204 or on a removable digital medium such as for example a disk 1206 as described previously. According to an optional variant, the executable code of the programs can be received by means of the communication network, via the interface 1202, in order to be stored in one of the storage means of the communication device 1200, such as the hard disk 1204, before being executed.

The central processing unit 1211 is preferably adapted to control and direct the execution of the instructions or portions of software code of the program or programs according to the disclosure, which instructions are stored in one of the aforementioned storage means. On powering up, the program or programs that are stored in a nonvolatile memory, for example on the hard disk 1204 or in the read-only memory 1207, are transferred into the random access memory 1212, which then contains the executable code of the program or programs, as well as registers for storing the variables and parameters necessary for implementing the disclosure.

In a preferred embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a skilled person in the art which lie within the scope of the present disclosure.

Many further modifications and variations will suggest themselves to those versed in the art upon referring to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an Intelligent Transport System, ITS, the method comprising, at a transmitting ITS station:
obtaining a geometrical description of a plurality of sections of a portion of a road infrastructure, each section of the plurality of sections comprising at least one lane and at least one section of the plurality of sections comprising a plurality of lanes;
determining a connection between at least one lane of the at least one section of the plurality of sections comprising a plurality of lanes and at least one lane of another section of the plurality sections; and
transmitting an ITS message comprising an item of information describing the determined connection.

2. The method of claim 1, wherein the ITS message further comprises an item of information describing a least a part of the obtained geometrical description.

3. The method of claim 1 or claim 2, further comprising detecting a particular event, the ITS message being transmitted in response to detecting the particular event.

4. The method of any one of claims 1 to 3, further comprising determining a position of an object or an event, the transmitted ITS message comprising an item of information describing the determined position.

5. The method of claim 4, wherein the position is described as a distance, from a point of reference, along a set of one or more connected lanes.

6. The method of any one of claims 1 to 5, further comprising determining an area of the road infrastructure, the transmitted ITS message comprising an item of information describing the determined area.

7. The method of claim 6, wherein the determined area is described as a set of one or more portions of one or more lanes of one or more sections.

8. The method of claim 7, wherein the determined area is further described by its beginning and/or its end.

9. The method of claim 6, wherein the determined area is described using a distance, from a point of reference, along a set of one or more connected lanes.

10. The method of any one of claims 1 to 9, further comprising, prior to or after transmitting the ITS message, transmitting another ITS message, the other ITS message comprising a reference of at least one of the connected lanes.

11. The method of any one of claims 1 to 10, wherein the ITS message is a Decentralized Environmental Notification Message, DENM, or a Collective Perception Message, CPM.

12. The method of claim 11, wherein the ITS message is a DENM and wherein the item of information describing the determined connection is stored in a Road Configuration Container, RCC.

13. A method of communication in an Intelligent Transport System, ITS, the method comprising, at a receiving ITS station:
obtaining a geometrical description of a plurality of sections of a portion of a road infrastructure, each section of the plurality of sections comprising at least one lane and at least one section of the plurality of sections comprising a plurality of lanes;
receiving an ITS message comprising an item of information describing a connection between at least one lane of the at least one section of the plurality of sections and at least one lane of another section of the plurality sections; and
upon identifying an event, determining the relevance of the identified event as a function of the connection.

14. The method of claim 13, further comprising determining a position of the identified event, the position being described in an item of information of the received ITS message.

15. The method of claim 14, wherein the position is described as a distance, from a point of reference, along a set of one or more connected lanes.

16. The method of any one of claims 13 to 15, further comprising determining an area of the road infrastructure, the received ITS message comprising an item of information describing the area, the area being associated with the identified event.

17. The method of claim 16, wherein the area is described as a set of one or more portions of one or more lanes of one or more sections.

18. The method of claim 17, wherein the determined area is further described by its beginning and/or its end.

19. The method of claim 16, wherein the area is described using a distance, from a point of reference, along a set of one or more connected lanes.

20. The method of any one of claims 13 to 19, further comprising, prior to or after receiving the ITS message, receiving another ITS message, the other ITS message comprising a reference of at least one of the connected lanes.

21. The method of any one of claims 13 to 20, wherein the ITS message is a Decentralized Environmental Notification Message, DENM, or a Collective Perception Message, CPM.

22. A computer program product for a programmable apparatus, the computer program product comprising a sequence of instructions for implementing each of the steps of the method according to any one of claims 1 to 21 when loaded into and executed by the programmable apparatus.

23. A non-transitory computer-readable storage medium storing instructions of a computer program for implementing each of the steps of the method according to any one of claims 1 to 21.

24. A device for an Intelligent Transport System, ITS, station, the device comprising a processing unit configured for carrying out each of the steps of the method according to any one of claims 1 to 21.
